# EUROPÄISCHE PATENTSCHRIFT

(11) **EP 3 302 210 B1**
(45) Veröffentlichungstag und Bekanntmachung des Hinweises auf die Patenterteilung: **08.07.2020**
(21) Anmeldenummer: 16719411.7
(22) Anmeldetag: 29.04.2016
(51) Int. Cl.: A47L 15/42, A47L 15/44, D06F 39/00

(54) **VORRICHTUNG UND VERFAHREN ZUR BESTIMMUNG DER SCHMUTZFRACHT IN EINER SPÜL- ODER WASCHFLOTTE**
DEVICE AND METHOD FOR DETERMINING THE DIRT LOAD IN A RINSING OR DETERGENT SOLUTION
DISPOSITIF ET PROCÉDÉ POUR DÉTERMINER LA CHARGE EN SALISSURES D'UN BAIN DE LAVAGE

(30) Priorität: 28.05.2015 DE 102015209824
(43) Veröffentlichungstag der Anmeldung: 11.04.2018
(73) Patentinhaber: BSH Hausgeräte GmbH, 81739 München (DE); Henkel AG & Co. KGaA, 40589 Düsseldorf (DE)
(72) Erfinder: KESSLER, Arnd, 40789 Monheim am Rhein (DE); LAMBERT, Edith, 53115 Bonn (DE); MUSSMANN, Nina, 47877 Willich (DE); STAMMINGER, Rainer, 53115 Bonn (DE); WEBER, Thomas, 41541 Dormagen (DE); GERSTENLAUER, Michaela, 89434 Blindheim (DE); HEISSLER, Heinz, 89407 Dillingen (DE); STICKEL, Martin, 89537 Giengen (DE)
(86) Internationale Anmeldenummer: PCT/EP2016/059648
(87) Internationale Veröffentlichungsnummer: WO 2016/188705

(56) Entgegenhaltungen:
- EP-A1- 0 748 891
- EP-A1- 2 030 556
- EP-A2- 0 849 390
- CN-A- 105 147 216
- CN-B- 102 720 034
- DE-A1- 10 305 093
- DE-A1- 19 806 559
- DE-A1-102009 000 879
- DE-A1-102009 046 240
- DE-A1-102012 210 991
- DE-B3- 10 319 467
- JP-A- 2014 014 561
- US-A1- 2013 036 772
- US-A1- 2013 042 652
- Anonymous: "Bosch's Home Connect app will control competitors' appliances - CNET", , 5. Januar 2015 (2015-01-05), XP055277267, Gefunden im Internet: URL:http://web.archive.org/web/20150105080 503/http://www.cnet.com/news/boschs-home-c onnect-app-will-control-competitors-applia nces [gefunden am 2016-06-02]

## Beschreibung

Die vorliegende Erfindung betrifft eine Vorrichtung und ein Verfahren zur Bestimmung der Schmutzfracht in einer Spül- oder Waschflotte in einem wasserführenden Haushaltsgerät, beispielsweise in einer Geschirrspülmaschine. Ferner betrifft die Erfindung ein wasserführendes Haushaltsgerät mit einer solchen Vorrichtung. Die Erfindung richtet sich ferner auch auf Verfahren zum Reinigen von Spülgut in einem wasserführenden Haushaltsgerät sowie die Verwendung von Reinigungsmittelangebotsformen in Kombination mit den hierin beschriebenen Verfahren.

In wasserführenden Haushaltsgeräten, wie beispielsweise Geschirrspülmaschinen, kann mit Hilfe von Sensoren, insbesondere optische Sensoren, die beispielsweise die Trübung der Spül- oder Waschflotte messen, auf Unterschiede in Bezug auf Quantität und Kinetik der Schmutzfracht in der Spül- oder Waschflotte, die mit der Verschmutzung des Spülguts korreliert, reagiert werden. Die Spülparameter können je nach erkannter Trübung angepasst werden. Eine derartige Sensorik in Kombination mit einer entsprechend ausgestalteten Dosiervorrichtung wird beispielsweise in der Druckschrift WO 2011/110243 A1 offenbart. Weiterhin offenbart die Druckschrift WO 2005/058126 A1 eine Geschirrspülmaschine mit einer Dosiervorrichtung für die Zugabe von Zuschlagmitteln, beispielsweise in den Spülbehälter der Geschirrspülmaschine. Hierbei ist wenigstens eine nicht zum Klarspülen dienende Basischemikalie und/oder wenigstens zwei Basischemikalien gemeinsam, nicht jedoch sämtliche Basischemikalien eines Allround-Produkts gemeinsam, und/oder wenigstens ein Reaktionsgemisch aus Basischemikalien unabhängig zugebbar.

Die bisherige Technik erlaubt es allerdings nicht ausreichend, die Schmutzbeladung in der Spül- oder Waschflotte zu charakterisieren, insbesondere in dem Sinne, dass für den Reinigungsvorgang besonders relevante Schmutzkomponenten, wie fett-, stärke- oder proteinhaltige Anschmutzungen, insbesondere isoliert, erfasst werden. Da die unterschiedlichen Schmutzkomponenten auch unterschiedliche Bestandteile des verwendeten Wasch- oder Reinigungsmittels zur effizienten Reinigung benötigen, ist es wünschenswert, eine spezifischere Sensorik bereitzustellen, beispielsweise um dann daraus Dosierregeln in dem Wasch- oder Spülprozess abzuleiten. Das Fehlen einer solchen Möglichkeit in existierenden Systemen hat zur Folge, dass das vom Benutzer gewünschte Reinigungsergebnis häufig nicht erreicht wird.

Des Weiteren haben die derzeit verwendeten optischen Messsysteme, die die Trübung der Spülflotte beziehungsweise des Spülwasser bestimmen, den Nachteil, dass sie nicht zwischen Trübungen durch dispergierte Anschmutzungen von der Spülgutbeladung, Restschmutz aus der Maschine, insbesondere dem Maschinensumpf, Trübungen durch die verwendeten Reinigungsmittel oder Niederschläge wie Kalk, unterscheiden können. Es besteht daher auch dahingehend Verbesserungsbedarf, dass optische Sensorsysteme bereitgestellt werden, die zwischen der tatsächlichen Schmutzbeladung und anderen Faktoren, die die Trübung der Flotte beeinflussen, differenzieren können.

Die Druckschrift DE 103 05 093 A1 offenbart ein Verfahren zur in-situ-Bestimmung und Überwachung von Verunreinigungszuständen von Flüssigkeiten und/oder bzw. zusätzlich zur Kontrolle von Flüssigkeitspegeln mit weißen Lichtemitterdioden sowie in Ergänzung dazu mit infrarote bzw. ultraviolette Strahlung emittierenden Halbleiterinjektionsdioden und einem faseroptischen Spektrometer oder einem ähnlichen optoelektronischen Empfänger an einem Steig- beziehungsweise Durchflussrohr oder an einem Bypass, deren Spektrenmodifikation durch die Flüssigkeit oder/und durch die bewusst oder unbewusst in die Flüssigkeit eingebrachte Verunreinigungen bei unterschiedlichen Positionen und Schaltzuständen ausgewertet werden. Ferner wird eine Vorrichtung zur Durchführung des Verfahrens offenbart, wobei mindestens zwei weiße LED an dem Bypass oder Steig- beziehungsweise Durchflussrohr zueinander um 90° versetzt angebracht sind.

Die Druckschrift DE 198 06 559 A1 offenbart ein Verfahren zur Behandlung von Geschirr in Spülmaschinen, bei dem eine Strahlung in eine Spülflotte hineingestrahlt wird, für wenigstens einen Wellenlängenbereich vorzugsweise einer Wellenlänge die Strahlungsmenge der unter jeweils einem vorbestimmten Winkel wieder heraustretenden Strahlung ermittelt beziehungsweise erfasst wird, davon ausgehend die Art und die Konzentration von Verschmutzungsanteilen und/oder Reinigungsmittelanteilen der Spülflotte ermittelt werden und das Spülprogramm anhand dieser ermittelten Daten optimiert wird. Ferner wird eine Vorrichtung zum Ausführen des Verfahrens zur Bestimmung der Art und der Konzentration von Verschmutzungsanteilen und/oder Reinigungsmittelanteilen in der Spülflotte von Spülmaschinen offenbart, umfassend wenigstens eine Strahlungsquelle, die in wenigstens einem Wellenlängenbereich vorzugsweise einer Wellenlänge Strahlung aussendet, wenigstens einen Strahlungsempfänger zur Bestimmung der von der Spülflotte hindurchgelassenen und/oder seitlich gestreuten und/oder rückwärts gestreuten Strahlungsmenge und wenigstens eine Einheit zur Ansteuerung der wenigstens einen Strahlungsquelle und zur Auswertung des Signals des wenigstens einen Strahlungsempfängers.

Die Druckschrift US 2013/0042652 A1 offenbart ein Dosiersystem zur Verwendung in Verbindung mit einem wasserführenden Haushaltsgerät wie eine Waschmaschine, Spülmaschine, Wäschetrockner oder dergleichen. Das Dosiersystem umfasst wenigstens einen Vorratsbehälter zur Bevorratung einer Mehrzahl von Dosierportionen wenigstens einer fließfähigen Zubereitung und wenigstens ein Dosiergerät, welches mit einem Vorratsbehälter koppelbar ist, welches zur Positionierung außerhalb des Behandlungsraums des wasserführenden Haushaltsgeräts vorgesehen ist und welches keine Verbindung zu einer wasserführenden Leitung des wasserführenden Haushaltsgeräts aufweist. Weiterhin umfasst das Dosiersystem wenigstens einen Sensor, der zumindest das Vorhandensein von Wasser im wasserführenden Haushaltsgeräts detektiert, wenigstens eine Pumpe oder Schwingzerstäuber zur Förderung beziehungsweise Freisetzung von Zubereitung aus dem Vorratsbehälter beziehungsweise Dosiergerät, wenigstens eine Steuereinheit, die mit dem Sensor und der Pumpe oder Schwingzerstäuber in der Art zusammenwirkt, dass bei Vorliegen eines definierten Sensorsignals, dass das Vorhandensein von Wasser und/oder den Betrieb des wasserführenden Haushaltsgeräts repräsentiert, zumindest eine Zubereitung aus dem Vorratsbehälter beziehungsweise Dosiergerät mittels der Pumpe oder Schwingzerstäuber gefördert wird, sowie wenigstens eine Fluidleitung, die den Vorratsbehälter beziehungsweise das Dosiergerät mit dem Behandlungsraum des wasserführenden Haushaltsgeräts verbindet, so dass eine Zubereitung aus dem außerhalb des Behandlungsraums des wasserführenden Haushaltsgeräts positionierten Dosiergeräts über eine mit dem Behandlungsraum in Verbindung stehenden Öffnung des wasserführenden Haushaltsgeräts in den Behandlungsraum des wasserführenden Haushaltsgeräts zuführbar ist.

Die Druckschrift DE 10 2009 000 879 A1 offenbart eine flüssige Wasch- oder Reinigungsmittelzubereitung, umfassend > 5 Gewichtsprozent mindestens eines wasch- oder reinigungsaktiven Enzyms, > 5 Gewichtsprozent mindestens eines organischen Lösungsmittels, Borsäure oder ein Borsäurederivat und eine Ca- oder Mg-Ionenquelle. Weiterhin offenbart diese Druckschrift ein maschinelles Geschirrspülverfahren unter Einsatz einer Wasch- oder Reinigungsmittelzubereitung oder einer Reinigungsmittelkombination oder einer Reinigungsmittelangebotsform oder eines Reinigungsmitteldosiersystems, in dessen Verlauf aus einer im Innenraum der Geschirrspülmaschine befindlichen Kartusche eine Teilmenge des in der Kartusche befindlichen Reinigungsmittels in den Innenraum der Geschirrspülmaschine dosiert wird, wobei eine Restmenge des in der Kartusche befindlichen Reinigungsmittels bis zum Ende des Geschirrspülverfahrens in der Kartusche verbleibt und wobei diese Restmenge mindestens der doppelten, vorzugsweise mindestens der vierfachen und insbesondere mindestens der achtfachen Menge der Teilmenge entspricht.

Die Druckschrift DE 10 2012 210 991 A1 offenbart ein Kombinationsprodukt, umfassend ein Verpackungsmittel und mindestens zwei in diesem Verpackungsmittel befindliche, voneinander getrennte und fließfähige Wasch- oder Reinigungszusammensetzungen, wobei die erste Zusammensetzung 10 bis 75 Gewichtsprozent Gerüststoff(e), 0,1 bis 10 Gewichtsprozent Enzympräparation und 24,9 bis 89,9 Gewichtsprozent Wasser enthalt und wobei die zweite Zusammensetzung 10 bis 75 Gewichtsprozent Gerüststoff(e), weniger als 0,1 Gewichtsprozent Enzympräparation und 25 bis 90 Gewichtsprozent Wasser enthält. Die beiden Zusammensetzungen einen Dichteunterschied von mindestens 2 Prozent, bezogen auf die niedrigere Dichte, auf. Weiterhin offenbart diese Druckschrift ein automatisches Wasch- oder Reinigungsmittelverfahren, insbesondere ein maschinelles Geschirrspülmittelverfahren, bei welchem aus dem genannten Kombinationsprodukt die Wasch- oder Reinigungszusammensetzungen in eine in der Maschine vorgesehene oder in eine separate Dosiervorrichtung oder direkt in die Maschine dosiert werden und anschließend der Wasch- oder Reinigungsvorgang in Gang gesetzt wird.

Vor diesem Hintergrund besteht eine Aufgabe der vorliegenden Erfindung darin, eine verbesserte Erkennung der Schmutzfracht in einer Spül- oder Waschflotte in einem wasserführenden Haushaltsgerät bereitzustellen.

Demgemäß wird in einem ersten Aspekt eine Vorrichtung zur Bestimmung der Schmutzfracht in einer Spül oder Waschflotte in einem wasserführenden Haushaltsgerät vorgeschlagen. Die Vorrichtung weist einen Sensor zum Erfassen von spektralen Messwerten von Schmutzkomponenten in der Spül- oder Waschflotte in dem wasserführenden Haushaltsgerät unter Verwendung von Nahinfrarot(NIR)-Spektroskopie, wobei der Sensor insbesondere dazu eingerichtet ist, eine Transmissionsmessung und/oder eine Reflexionsmessung durchzuführen, eine Bestimmungseinheit zum Bestimmen der Schmutzfracht der Spül- oder Waschflotte, basierend auf den erfassten spektralen Messwerten der Spül- oder Waschflotte, und eine Anpassungseinheit zum Anpassen von Spülparametern eines aktuellen Spülprogramms, basierend auf der bestimmten Schmutzfracht auf. Die Bestimmungseinheit ist dazu eingerichtet, Ausgangsdaten des Sensors mit einem vordefinierten Kalibrationsmodell zu vergleichen.

Die Vorrichtung basiert auf dem Prinzip, nicht die Trübung der Spül- oder Waschflotte zu bestimmen, sondern spezifisch die Menge und vorzugsweise auch Art der Anschmutzungen in der Flotte, das heißt die einzelnen Schmutzkomponenten, zu bestimmen. Auf diese Weise kann indirekt die Anschmutzung des Spülguts in Bezug auf einzelne Schmutzkomponenten bestimmt werden. Die Vorrichtung kann daher zur Ermittlung der Abtragsleistung der Anschmutzung, das heißt zur Ermittlung, wie viel und welche Anschmutzung vom Spülgut entfernt wird, dienen.

Durch die vorgeschlagene Vorrichtung kann eine verbesserte Erkennung in Bezug auf die Beschaffenheit, Quantität und Kinetik der Anschmutzung von Spülgut in einem wasserführenden Haushaltsgerät ermöglicht werden. Auf diese Weise kann für den Nutzer eines wasserführenden Haushaltsgeräts eine optimierte Reinigung bei optimierter Schonung von Ressourcen durchgeführt werden.

Es handelt sich insbesondere um die drei Grundbestandteile des Schmutzes: Fett, Protein und Stärke. Im Vorfeld können hierzu bekannte Proben vermessen und mit Hilfe chemometrischer Analysemethoden eine Verknüpfung hergestellt werden. Ein solches Kalibrationsmodell kann dann zur Bestimmung unbekannter Proben anhand des NIR-Spektrums während eines Spül- oder Waschprogramms verwendet werden.

Unter einem wasserführenden Haushaltsgerät kann in diesem Zusammenhang beispielsweise eine Geschirrspülmaschine mit Geschirr als Spülgut oder eine Waschmaschine mit Textilwäsche als Spülgut verstanden werden. Unter Spül- oder Waschflotte, wie hierin verwendet, wird eine wässrige Flüssigkeit inklusive der Gesamtheit aller ihrer Komponenten, das heißt das Lösungsmittel (meist Wasser) sowie alle darin enthaltenen gelösten, emulgierten oder dispergierten Bestandteile, verstanden, die dazu verwendet wird ein Spülgut, wie zum Beispiel Geschirr in einer Geschirrspülmaschine oder Textilien in einer Waschmaschine, zu behandeln, üblicherweise in der Absicht es zu reinigen/waschen. Die Spül- oder Waschflotte enthält somit typischerweise Wasser und die darin befindlichen Bestandteile eines Wasch- oder Reinigungsmittels, sowie Schmutzbestandteile. Sofern ein mehrstufiges Reinigungsverfahren angewendet wird, erfasst der Begriff die Flüssigkeiten die in allen Stufen des Verfahrens eingesetzt werden. Unter Schmutzfracht oder Schmutzbeladung wird hierin die Gesamtheit der Anschmutzungen in einem gegebenen Medium, typischerweise der Wasch- oder Spülflotte, verstanden. Anschmutzungen bezeichnet die Gesamtheit aller Schmutzkomponenten. Hauptbestandteile der Anschmutzungen bei Geschirrspülen oder Textilwaschen sind Fette, Proteine und Stärke. Diese Hauptbestandteile setzten sich wiederum aus einer Vielzahl organischer Verbindungen zusammen, die alle unter den jeweiligen Oberbegriff der Komponente fallen. Diese organischen Verbindungen können erfindungsgemäß mittels NIR in der Spül- oder Waschflotte sowohl qualitativ als auch quantitativ bestimmt werden. Das Bestimmen der Schmutzfracht schließt somit auch die individuelle Bestimmung der Art und/oder Menge der einzelnen Schmutzkomponenten, beziehungsweise der diese bildenden organischen Verbindungen, ein.

Der verwendete Sensor ist dazu eingerichtet, eine Nahinfrarotspektroskopie zu verwenden, im Folgenden auch NIR genannt. Je nach Anforderung kann dabei der vollständige NIR-Bereich erfasst oder nur einzelne spezifische Wellenlängen gemessen und betrachtet werden. Diese gemessenen Wellenlängen werden auch als spektrale Messwerte bezeichnet.

Die NIR-Messung erfasst beispielsweise eine Wellenlänge oder einen Wellenlängenbereich zwischen 800 und 2.500 nm beziehungsweise eine Wellenzahl oder einen Wellenzahlbereich zwischen 12.500 und 4.000 cm⁻¹. Bei der NIR-Spektroskopie handelt es sich um eine Schwingungsspektroskopie, die auf der Anregung von Molekülschwingungen durch elektromagnetische Strahlung in dem nahen Infrarotbereich entsteht. In diesem Bereich werden Obertonschwingungen und Kombinationsschwingungen der Molekülgrundschwingung angeregt. Die auftretenden Molekülschwingungen können Valenzschwingungen, das heißt Änderung der Bindungslänge der Moleküle, oder Deformationsschwingungen, das heißt Änderung des Bindungswinkels der Moleküle, sein. NIR ist besonders zur Analyse von organischen Verbindungen geeignet, da damit funktionelle Gruppen organischer Verbindungen, wie beispielsweise die Gruppen C-H, O-H, N-H, C=O, CH₂, CH₃, identifiziert werden können. Da jedes Molekül basierend auf dem Vorhandensein von funktionellen Gruppen ein spezifisches Absorptionsprofil aufweist, kann NIR dazu dienen, bestimmte Verbindungen oder Substanzklassen zu bestimmen.

Eine NIR-Messung ist, im Vergleich zu Messungen in dem MIR (mittleres Infrarot) oder FIR (fernes Infrarot) Bereich, schnell und mit relativ niedrigen Kosten verbunden. Des Weiteren ist eine NIR-Messung nicht zerstörend und erfordert nur eine geringe Probenvorbereitung. Im Vergleich zu anderen Methoden bietet eine NIR-Messung eine relativ große Eindringtiefe. Flüssigkeiten, das heißt das Spül- oder Waschwasser der Flotte, können unverdünnt gemessen werden, wobei nur eine geringe Abschwächung an Glas erfolgt. Daher können beispielsweise Messflotte und Sensor räumlich getrennt werden.

NIR wird unter anderem in der Landwirtschaft, Lebensmittelchemie oder Pharmazie eingesetzt, um zum Beispiel Wasser, Stärke, Fett, Proteine, Alkoholgehalt oder Zuckergehalt in Lebensmitteln und Medikamenten zu bestimmen.

Durch die NIR-Messung des Sensors können die spektralen Messwerte von organischen Verbindungen in der Spül- oder Waschflotte erfasst werden. Die Bestimmungseinheit kann basierend auf diesen Messwerten die Menge und Art der organischen Verbindungen und damit die Art der aktuell (noch) vorhandenen Anschmutzung erkennen.

Durch die Anpassungseinheit können anschließend Spülparameter eines aktuellen Spülprogramms basierend auf der bestimmten Anschmutzung angepasst werden. Da der Sensor die Schmutzfracht in der Flotte bestimmt, das heißt indirekt die Anschmutzung auf dem Spülgut, erfolgt die Regelung der Spülparameter durch die Anpassungseinheit auf Basis der Art der gefundenen Einzelkomponenten in Kombination mit Menge und Zeit in dem Spülwasser.

Spülparameter können beispielsweise Temperaturen, Drehzahlen, Wechsel zwischen verschiedenen Sprühebenen (definierte Zeit in einer Ebene, um festzustellen, in welcher Ebene ein Abtrag noch möglich ist), Zeiten, Wassermengen, Anzahl der Reinigungs- und/oder Spülbäder, Bäder beheizt oder unbeheizt, Abpumpmechanismen, Zugabe von zusätzlichen beziehungsweise einzelnen Reinigerkomponenten etc. sein. Diese Spülparameter können in Abhängigkeit von weiteren Rahmenbedingungen, die bereits voreingestellt sein können, abhängen. Zu diesen Rahmenbedingungen zählen beispielsweise Einsparung von Ressourcen, Schnelligkeit oder Materialschonung.

Im Falle einer Transmissionsmessung wird die Strahlung ermittelt, die durch die in der Spül- oder Waschflotte vorhandenen Schmutzmoleküle, das heißt organischen Verbindungen, hindurchgeht. Bei einer Reflexionsmessung wird die von den Molekülen reflektierte Strahlung erfasst. Auch eine Kombination der beiden Messungen ist möglich.

Bei einer reinen Transmissionsmessung kann der Sensor über eine Filtervorrichtung oder über ein Filtersystem vor Feststoffen geschützt werden, um die Messung zu optimieren. Die Transmissionsmessung kann beispielsweise mittels einer (Durchfluss-)Küvette in geeigneter Schichtdicke, gegebenenfalls auch in Form einer Sonde erfolgen.

Durch den Vergleich der Ausgangsdaten des Sensors mit dem vordefinierten Kalibrationsmodell können bereits im Vorfeld bekannte Proben vermessen und mit Hilfe chemometrischer Analysemethoden eine Verknüpfung hergestellt werden. Ein solches Kalibrationsmodell kann dann zur Bestimmung unbekannter Proben anhand des NIR-Spektrums während eines Spülprogramms verwendet werden.

Basierend auf den ermittelten Schmutzkomponenten kann ein charakteristisches Bild über den gesamten Spülprozess erstellt werden, das heißt eine Entwicklung der Anschmutzung des Spülguts basierend auf der Art und Menge an Schmutzkomponenten in der Spül- oder Waschflotte. Mit Hilfe dieser Informationen ist es möglich, Spülprogramme spezifisch anzupassen und zu optimieren. Je nach detektierter Charakteristik können unterschiedlichste Szenarien dargestellt werden.

Gemäß einer weiteren Ausführungsform ist die Bestimmungseinheit dazu eingerichtet, bei der Bestimmung der Schmutzfracht eine Mehrzahl von verschiedenen Schmutzkomponenten innerhalb der Schmutzfracht zu bestimmen . Hierbei handelt es sich insbesondere um die drei Grundbestandteile des Schmutzes: Fett, Protein und Stärke.

Gemäß einer weiteren Ausführungsform enthält das Kalibrationsmodell eine Mehrzahl von unterschiedlichen spektralen Informationen mit zugeordneten organischen Verbindungen.

Das Kalibrationsmodell kann unterschiedliche spektrale Informationen enthalten. Die vom Sensor erfassten spektralen Messwerte können durch Abgleich mit diesen spektralen Informationen einen Rückschluss auf bestimmte organische Verbindungen, das heißt bestimmte Schmutzkomponenten, zulassen. Die Anpassungseinheit kann dann beispielsweise eine Anpassung des Programmablaufs, beispielsweise durch Anpassung der Spülparameter, über bereits vordefinierte Schwellenwerte vornehmen. Die vordefinierten Schwellenwerte können ebenfalls in dem Kalibrationsmodell enthalten sein.

Die spektralen Informationen liegen als Informationen über die Absorption bestimmter Schmutzkomponenten in engen Wellenlängenbereichen oder einzelnen Banden vor. Für die Bestimmung von Fetten als Schmutzkomponente in der Spül- oder Waschflotte kommen hierbei insbesondere Spektralbereiche im Bereich von Wellenzahlen von 10.803 bis 7.405 cm⁻¹, von 5.990 bis 5.334 cm⁻¹ und/oder von 4.875 bis 4.104 cm⁻¹, insbesondere von 6.990 bis 5.388 cm⁻¹, von 4.860 bis 4.130 cm⁻¹ und/oder von 4.400 bis 4.200 cm⁻¹ in Betracht. Wellenzahlbereiche, die sich für den Nachweis von Proteinen eignen liegen, im Bereich von 6.904 bis 5.326 cm⁻¹ und/oder von 4.655 bis 4.543 cm⁻¹, insbesondere von 6.570 bis 6.200 cm⁻¹, von 5.840 bis 5.760 cm⁻¹, von 5.410 bis 5.346 cm⁻¹ und/oder von 4.655 bis 4.555 cm⁻¹. Für den Stärkenachweis in Betracht kommende Spektralbereiche liegen im Bereich von 9.947bis 7.849 cm⁻¹ und/oder von 4.802 bis 4.273 cm⁻¹, insbesondere von 8.800 bis 8.700 cm⁻¹ und/oder von 4.787 bis 4.302 cm⁻¹. Für jede der vorgenannten Schmutzkomponenten können mehrere der angegebenen Spektralbereiche kombiniert werden, insbesondere auch, um bei überlappenden Bereichen eine möglichst eindeutige Identifizierung der Schmutzkomponente zu ermöglichen.

Die Bestimmung der Schmutzfracht kann zum einen die Identifizierung der Schmutzkomponenten anhand der spektralen Messwerte und gegebenenfalls den Vergleich mit einem Kalibrationsmodell beinhalten. Alternativ oder zusätzlich kann die Bestimmung der Schmutzfracht aber auch dazu dienen, die Schmutzabtragsleistung zu bestimmen. Dabei wird aus der zeitlichen Veränderung, gegebenenfalls in Verbindung mit weiteren Informationen, wie Temperatur, Zeit, etc., auf die Spül-/Reinigungsleistung des Geräts beziehungsweise des Geräteprogramms geschlossen. So kann beispielsweise, wenn keine weitere Änderung eines gegebenen Signals feststellbar ist, der Reinigungsprozess im Hinblick auf die mit diesem Signal bestimmte Schmutzkomponente als abgeschlossen gelten. In bestimmten Ausführungsformen müssen dabei vorher definierte Schwellenwerte erreicht werden, beispielsweise eine Mindesttemperatur, um sicherzustellen, dass beispielsweise eine fetthaltige Anschmutzung geschmolzen vorliegt.

Grundsätzlich kann die Anpassung des aktuellen Spülprogramms basierend auf der bestimmten Anschmutzung oder der Schmutzabtragsleistung angepasst werden, wie es oben beschrieben ist. Wie bereits oben beschrieben kann die Anpassung auf Basis von Messwerten hinsichtlich der Art oder Menge einer Anschmutzung oder den Mengenverhältnissen bestimmter Schmutzkomponenten zueinander, aber auch zeitlichen Änderungen in der Schmutzabtragsleistung (Anstieg, Stagnation, Abfall der Schmutzfracht), erfolgen. Über das Detektieren der Abtragsleistung von beispielsweise Proteinen oder Stärke können beispielsweise Enzymphasen gestärkt werden. Des Weiteren können unabhängig vom verwendeten Reiniger Schwächen (des Reinigers) durch Stärken der Programmstruktur ausgeglichen und das Potential leistungsstarker Reiniger durch Einsparungen in der Programmstruktur genutzt werden, beispielsweise einer Reduktion der Programmlaufzeit, der verwendeten Temperatur oder der Menge an Wasser. Hierdurch ist es auch möglich, die Alterung der Reiniger zu kompensieren. Die Abtragsleistung kann durch ein Anpassen der Temperatur, Drehzahl, Zeit, Reinigerzugabe etc. optimiert werden. Die Emulgierbarkeit von Fetten kann ebenfalls durch zum Beispiel ein Anpassen der Temperatur des Spülwassers oder weitere Reinigerzugabe verbessert werden. Über die Anpassung der Anzahl und/oder Abfolge einzelner Badstrukturen kann der Schmutzaustrag optimiert werden: ein oder mehrere Reinigungsbäder und/oder Zwischenspülbäder, je nach Bedarf beheizt oder unbeheizt.

Gemäß einer Ausführungsform kann die Anpassungseinheit das Spülprogramm basierend auf der bestimmten Anschmutzung oder Schmutzabtragsleistung das Spülprogramm dahingehend ändern, dass die Spülzeit verlängert oder verkürzt, die Temperatur erhöht oder gesenkt, ein zusätzlicher Wasserwechsel durchgeführt wird oder ein solcher entfällt, Reinigungsmittel oder Reinigungsmittelkomponenten zudosiert, oder mechanische Spülgrößen, wie beispielsweise die Sprühstärke oder die Art und Weise der Spülflottenumwälzung, geändert werden.

Die Anpassung der Zugabe der verwendeten Reinigungsmittel, entweder als Gesamtzusammensetzung oder in Form von Einzelbestandteilen oder in Form an bestimmte Schmutzkomponenten angepasster Formulierungen kann in an sich bekannter Art und Weise erfolgen. Geeignete Dosiersysteme für Reinigungsmittel, insbesondere für Geschirrspül- und Textilwaschmaschinen, die auf ein Signal, insbesondere ein Messsignal reagieren, sowie verschiedene geeignete Reinigerformulierungen werden beispielsweise in den Druckschriften WO 2010/031607 A1, WO 2010/031605 A1, WO 2010/006761 A2 und WO 2009/146692 A2, WO 2011/110243 A1 und WO 2005/058126 A1 beschrieben; deren diesbezüglicher Offenbarungsgehalt wird hiermit zum Gegenstand der vorliegenden Beschreibung gemacht. Reinigerformulierungen, in denen die einzelnen Komponenten getrennt vorgehalten werden, bieten Vorteile hinsichtlich der Stabilität, der Kosten, der Einfachheit der Dosierung oder der Möglichkeit in verschiedenen Verhältnissen zu dosieren. Solche Reinigersysteme können beispielsweise in Form von, gegebenenfalls an das jeweilige Gerät angepassten, Kartuschen, wie sie ebenfalls in den oben genannten Patentveröffentlichungen beschrieben werden, bereitgestellt werden.

Derartige Dosiersysteme zur Mehrfachdosierung von Wasch- und Reinigungsmitteln sind bekannt und bei diesen Vorrichtungen kann zwischen in die Geschirrspülmaschine oder Textilwaschmaschine integrierten Dosiersystemen einerseits und eigenständigen, von der Geschirrspülmaschine oder Textilwaschmaschine unabhängigen und beweglichen Dosiersystemen andererseits unterschieden werden. Mittels dieser Dosiersysteme, welche die mehrfache der für die Durchführung eines einzelnen Reinigungsverfahrens notwendigen Reinigungsmittelmenge enthalten, werden Wasch- oder Reinigungsmittelportionen mittels eines Dosiergeräts aus einer Kartusche in automatischer oder halbautomatischer Weise im Verlauf mehrerer aufeinander folgender Reinigungsverfahren in den Innenraum der Reinigungsmaschine dosiert. Für den Verbraucher entfällt die Notwendigkeit der wiederholten manuellen Dosierung der Wasch- und Reinigungsmittel. Beispiele für derartige Vorrichtungen werden in den Druckschriften EP 1 759 624 A2, EP 1 976 970 A1, DE 10 2005 062 479 A1 oder WO 2005/058126 A1 beschrieben; deren diesbezüglicher Offenbarungsgehalt wird hiermit zum Gegenstand der vorliegenden Beschreibung gemacht.

In den Vorrichtungen und Verfahren der Erfindung kann daher eine Wasch- oder Reinigungsmittelzubereitung mittels einer in dem Innenraum des wasserführenden Haushaltsgeräts befindlichen Vorratsvorrichtung über mehrere Spülgänge dosiert werden.

Die erfindungsgemäß eingesetzte Anpassungseinheit kann zusätzlich auch Benutzereingaben berücksichtigen. Beispielsweise kann ein Nutzer ein wassersparendes, energiesparendes oder zeitsparendes Programm wünschen. Dies kann dann bei der Anpassung mitberücksichtigt werden. Des Weiteren kann der Nutzer voreinstellen, um welche Art von Spülgut es sich handelt, wie beispielsweise besonders fetthaltiges Spülgut.

In einer Ausführungsform kann auch vorgesehen sein, dass der Nutzer kein Spülprogramm auswählt, sondern lediglich Zusatzoptionen bestimmen kann. Die Auswahl des passenden Spülprogramms, beziehungsweise die Steuerung und Anpassung des Spülprogramms, erfolgt dann nur über den Sensor, die Bestimmungseinheit und die Anpassungseinheit.

Gemäß einer weiteren Ausführungsform ist der Sensor dazu eingerichtet, die organischen Verbindungen bei einer definierten Temperatur und/oder unter Verwendung eines Korrekturfaktors zu erfassen.

Da sich die NIR-Messung temperaturabhängig verhält, kann gemäß dieser Ausführungsform die Messung während einer definierten Temperatur erfolgen.

Anstelle einer definierten Temperatur kann der erfasste Messwert über einen Korrekturfaktor bei verschiedenen Temperaturen angepasst werden, um Fehlinterpretationen zu vermeiden.

Gemäß einer weiteren Ausführungsform ist der Sensor in einem Pumpensumpf des wasserführenden Haushaltsgeräts oder in einer Bypass-Anordnung innerhalb und/oder außerhalb eines Spülbehälters des wasserführenden Haushaltsgeräts angeordnet. Die Bestimmungs- und Anpassungseinheit können dann jeweils ebenfalls innerhalb und/oder außerhalb des wasserführenden Haushaltsgeräts angeordnet sein. Wenn es sich bei der Anpassungseinheit um ein Dosiersystem für Reinigungsmittel oder Reinigungsmittelkomponenten handelt, kann diese in bestimmten Ausführungsformen zumindest in Teilen auch nicht fest mit dem Gerät verbaut, sondern beispielsweise in Form einer Kartusche von außen ladbar sein. Entsprechende Dosiersysteme werden beispielsweise in den zuvor zitierten Druckschriften WO 2010/031607 A1, WO 2010/031605 A1, WO 2010/006761 A2, WO 2009/146692 A2, WO 2011/110243 A1 und WO 2005/058126 A1 beschrieben.

Wenn der Sensor in dem Pumpensumpf angeordnet ist, ist er in einem beruhigten Teil der Flotte angebracht, in dem eine stabile Messung möglich ist. Zusätzlich kann bei Bedarf die Drehzahl während der Messung auf eine vorher definierte Größe eingestellt werden. Der Sensor kann dabei über eine Art Filtersystem vor Feststoffteilen geschützt werden. Die Ausgestaltung der Lochgröße des Filters und die Festlegung des Volumenstroms verhindern hierbei insbesondere ein Festsetzen von Feststoffteilen über den Spülzyklus.

Der Sensor kann auch in einer Art Bypass angebracht werden. In dem Bypass können andere Rahmenbedingungen im Gegensatz zum Spülerinnenraum geschaffen werden. Hierbei zählen beispielsweise eine definierte Strömungsgeschwindigkeit (ohne Beeinflussung des Spülzyklus durch Drehzahlabsenkung) oder das Einstellen einer geeigneten Temperatur. Ein solcher Bypass kann beispielsweise vom Ausgang des Flottenspeichers in den Pumpensumpf unterhalb des Siebs führen.

Gemäß einer Ausführungsform ist der Sensor in dem wasserführenden Haushaltsgerät angeordnet. Des Weiteren wird ein wasserführendes Haushaltsgerät vorgeschlagen, welches eine wie oben beschriebene Vorrichtung zur Bestimmung einer Anschmutzung von Spülgut in dem wasserführenden Haushaltsgerät aufweist.

Das wasserführende Haushaltsgerät kann eine Geschirrspülmaschine oder eine Waschmaschine sein.

Gemäß einer weiteren Ausführungsform ist die Vorrichtung zur Bestimmung einer Anschmutzung von Spülgut dazu eingerichtet, mit einem externen Server zu kommunizieren.

Der externe Server kann eine Datenbank aufweisen. Die Vorrichtung kann mit dem externen Server über eine Internet-Verbindung, kabelgebunden oder kabellos, kommunizieren.

Gemäß einer weiteren Ausführungsform ist die Vorrichtung zur Bestimmung einer Anschmutzung von Spülgut dazu eingerichtet, die erfassten organischen Verbindungen und/oder die bestimmte Anschmutzung des Spülguts an den externen Server zu übermitteln.

Die übermittelten Informationen können in der Datenbank des externen Servers gespeichert werden. Des Weiteren können die Informationen zur Optimierung von Spülprozessen verwendet werden.

Das wasserführende Haushaltsgerät kann auch dazu eingerichtet sein, von dem externen Server ein Programmupdate zu empfangen.

Die übermittelten Informationen können dazu verwendet werden, Spülprogramme zu optimieren, die dann bei einem Programmupdate berücksichtigt werden können. Ein solches Update kann über eine Internetverbindung direkt auf das wasserführende Haushaltsgerät eingespielt werden.

Des Weiteren können über den externen Server, Kalibrationsmodelle empfangen werden. Diese können beispielsweise länderspezifisch angepasst sein. Ein länderspezifisches Kalibrationsmodell kann beispielsweise länderspezifische Lebensmittel, Schmutz und/oder Anschmutzung enthalten.

Die für die vorgeschlagene Vorrichtung beschriebenen Ausführungsformen und Merkmale gelten für die nachstehend vorgeschlagenen Verfahren entsprechend.

In einem weiteren Aspekt wird ein Verfahren zur Bestimmung der Schmutzfracht in einer Spül- oder Waschflotte in einem wasserführenden Haushaltsgerät vorgeschlagen. Das Verfahren weist die folgenden Schritte auf:
- Erfassen von spektralen Messwerten von Schmutzkomponenten in der Spül- oder Waschflotte in dem wasserführenden Haushaltsgerät unter Verwendung einer Nahinfrarotspektroskopie,
- Bestimmen der Schmutzfracht der Spül- oder Waschflotte basierend auf den erfassten spektralen Messwerten der organischen Verbindungen und
- Vergleichen der Ausgangsdaten mit einem vordefinierten Kalibrationsmodell.

Ein weiterer Aspekt der Erfindung richtet sich auf ein Verfahren zum Reinigen von Spülgut, insbesondere Geschirr oder Textilien, in einem wasserführenden Haushaltsgerät, insbesondere einer Geschirrspülmaschine oder einer Waschmaschine, umfassend:
- Erfassen von spektralen Messwerten von Schmutzkomponenten in einer Spül- oder Waschflotte in dem wasserführenden Haushaltsgerät unter Verwendung einer Nahinfrarotspektroskopie,
- Bestimmen der Schmutzfracht der Spül- oder Waschflotte basierend auf den erfassten spektralen Messwerten der Schmutzkomponenten,
- Vergleichen der Ausgangsdaten mit einem vordefinierten Kalibrationsmodell und
- Anpassen von Spülparametern eines aktuellen Spülprogramms basierend auf der bestimmten Schmutzfracht, wobei die Spülparameter ausgewählt werden aus einer Änderung der Spülzeit, der Temperatur, der Anzahl von durchgeführten Wasserwechseln, und mechanischen Spülgrößen.

Noch ein weiterer Aspekt der Erfindung betrifft Verfahren zum Reinigen von Spülgut, insbesondere Geschirr oder Textilien, in einem wasserführenden Haushaltsgerät, insbesondere einer Geschirrspülmaschine oder einer Waschmaschine, umfassend:
- Erfassen von spektralen Messwerten von Schmutzkomponenten in einer Spül- oder Waschflotte in dem wasserführenden Haushaltsgerät unter Verwendung einer Nahinfrarotspektroskopie,
- Bestimmen der Schmutzfracht der Spül- oder Waschflotte basierend auf den erfassten spektralen Messwerten der Schmutzkomponenten,
- Vergleichen der Ausgangsdaten mit einem vordefinierten Kalibrationsmodell und
- Dosieren eines Wasch- oder Reinigungsmittels basierend auf der bestimmten Schmutzfracht.

In verschiedenen Ausführungsformen der Erfindung wird das Verfahren unter Einsatz einer Mehrkomponenten-Reinigungsmittelangebotsform durchgeführt, umfassend mindestens zwei, vorzugsweise alle drei von:
a) einer vorzugsweise flüssige Reinigungsmittelzubereitung A, enthaltend mindestens einen Bestandteil mit Reinigungswirkung auf stärkehaltige Anschmutzungen, insbesondere eine Amylase,
b) einer vorzugsweise flüssige Reinigungsmittelzubereitung B, enthaltend mindestens einen Bestandteil mit Reinigungswirkung auf proteinhaltige Anschmutzungen, insbesondere eine Protease und
c) einer vorzugsweise flüssige Reinigungsmittelzubereitung C, enthaltend mindestens einen Bestandteil mit Reinigungswirkung auf fetthaltige Anschmutzungen, insbesondere eine Lipase oder mindestens ein nichtionisches Tensid.

Die Reinigungsmittelzubereitungen A, B und C können im Verlauf des Reinigungsverfahrens, vorzugsweise eines Geschirrspülverfahrens oder eines Textilwaschverfahrens, aus einer vorzugsweise in dem Innenraum des wasserführenden Haushaltsgeräts befindlichen Kartusche in den Innenraum des Geräts dosiert werden. Dabei kann eine Teilmenge a der in der Kartusche befindlichen

Reinigungsmittelzubereitung A in den Innenraum des Geräts dosiert werden, wobei eine Restmenge der in der Kartusche befindlichen Reinigungsmittelzubereitung A bis zum Ende des Verfahrens in der Kartusche verbleibt und diese Restmenge mindestens der doppelten, vorzugsweise mindestens der vierfachen und insbesondere mindestens der achtfachen Menge der Teilmenge a entspricht; und/oder eine Teilmenge b der in der Kartusche befindlichen Reinigungsmittelzubereitung B in den Innenraum des Geräts dosiert wird, wobei eine Restmenge der in der Kartusche befindlichen Reinigungsmittelzubereitung B bis zum Ende des Verfahrens in der Kartusche verbleibt und diese Restmenge mindestens der doppelten, vorzugsweise mindestens der vierfachen und insbesondere mindestens der achtfachen Menge der Teilmenge b entspricht; und/oder eine Teilmenge c der in der Kartusche befindlichen Reinigungsmittelzubereitung C in den Innenraum des Geräts dosiert wird, wobei eine Restmenge der in der Kartusche befindlichen Reinigungsmittelzubereitung C bis zum Ende des Verfahrens in der Kartusche verbleibt und diese Restmenge mindestens der doppelten, vorzugsweise mindestens der vierfachen und insbesondere mindestens der achtfachen Menge der Teilmenge c entspricht.

Die Reinigungsmittelangebotsform kann neben den Reinigungsmittelzubereitungen A, B und C eine, zwei oder mehr weitere Reinigungsmittelzubereitungen beispielsweise eine weitere Reinigungsmittelzubereitung D, umfassen. Diese insgesamt zwei, drei oder mehr Reinigungsmittelzubereitungen liegen vorzugsweise in einer gemeinsamen Kartusche vor und sind voneinander getrennt. Erfindungsgemäße Verfahren, insbesondere maschinelle Geschirrspülverfahren oder Textilwaschverfahren, die dadurch gekennzeichnet, dass die Reinigungsmittelzubereitungen A, B und C voneinander getrennt in einer gemeinsamen Kartusche vorliegen, werden bevorzugt. Die gemeinsame Konfektionierung der Reinigungsmittelzubereitungen in einer gemeinsamen Kartusche vereinfacht die Herstellung und Handhabung der Reinigungsmittelzubereitung. Werden die Reinigungsmittelzubereitungen in der gemeinsamen Kartusche derart konfektioniert, dass die voneinander getrennten Reinigungsmittelzubereitungen A, B und C einander benachbart sind, die zur Konfektionierung der Reinigungsmittelzubereitungen A, B und C genutzten Aufnahmekammer also mindestens eine gemeinsame Wand aufweisen, so ist die Konfektionierung der Reinigungsmittelzubereitungen in einer gemeinsamen Kartusche zudem geeignet, die chemische und physikalische Stabilität dieser Reinigungsmittelzubereitungen zu erhöhen und beispielsweise die nachteilige Wirkung von notwendigerweise auftretenden Temperaturschwankungen zu verringern.

Die Verfahren werden insbesondere zur wiederholten Dosierung von Reinigungsmittelzubereitungen aus in dem Innenraum des Geräts befindlichen Vorratsbehältern eingesetzt. Bevorzugte erfindungsgemäße Verfahren sind dabei dadurch gekennzeichnet, dass eine Teilmenge der vorzugsweise flüssigen Reinigungsmittelzubereitungen A, B und C vor ihrer Dosierung in den Innenraum des Geräts für die Dauer von mindestens zwei, vorzugsweise mindestens vier, besonders bevorzugt mindestens acht und insbesondere mindestens zwölf separater Reinigungsverfahren in dem in der in dem Gerät befindlichen Vorratsbehälter verbleibt.

Als "separate Reinigungsverfahren" werden im Rahmen der vorliegenden Anmeldung abgeschlossene Reinigungsverfahren bezeichnet, die vorzugsweise neben dem Hauptreinigungsgang weiterhin auch einen Vorspülgang und/oder einen Klarspülgang umfassen können und die beispielsweise mittels des Programmschalters einer Geschirrspülmaschine ausgewählt und ausgelöst werden können. Die Dauer dieser separaten Reinigungsverfahren beträgt vorzugsweise mindestens 15 Minuten, vorzugsweise zwischen 20 und 360 Minuten, bevorzugt zwischen 30 und 240 Minuten.

Die Zeitdauer zwischen zwei separaten Reinigungsverfahren, innerhalb derer die flüssige Reinigungsmittelzubereitung in den Innenraum des Geräts dosiert wird, beträgt mindestens 20 Minuten, vorzugsweise mindestens 60 Minuten, besonders bevorzugt mindestens 120 Minuten.

In Bezug auf die Reinigungswirkung erfindungsgemäßer Verfahren kann die Dosierung der zwei, drei oder mehr Reinigungsmittelzubereitungen zu unterschiedlichen Zeitpunkten im Verlauf des Verfahrens erfolgen.

In einer Ausführungsform können (bevorzugt feinkörnige) Enzymgranulate eingesetzt werden. Dies hat den Vorteil, dass die Enzyme im Hinblick auf die Temperaturschwankungen in der Maschine weniger empfindlich sind, das heißt, eine bessere Temperaturstabilität aufweisen.

Die in dem erfindungsgemäßen Verfahren eingesetzten Reinigungsmittelzubereitungen sind gemäß einer bevorzugten Ausführungsform vorzugsweise flüssig. Dies erleichtert die genaue Dosierung der Zubereitungen. Als ein wesentliches Lösungsmittel enthalten diese Zubereitungen vorzugsweise Wasser. Durch den Zusatz von Wasser zu den Reinigungsmittelzubereitungen A, B und C wird nicht allein deren Dosierung erleichtert, der Wassergehalt beschleunigt zudem die Freisetzung der reinigungsaktiven Inhaltsstoffe in die Reinigungsflotte.

Die erfindungsgemäß bevorzugt eingesetzten Reinigungsmittelzubereitungen A, B und optional auch C enthalten als einen wesentlichen Bestandteil wenigstens eine reinigungsaktive Enzymzubereitung. Der Gewichtsanteil der reinigungsaktiven Enzymzubereitung(en) am Gesamtgewicht der Reinigungsmittelzubereitung beträgt dabei vorzugsweise 2 bis 60 Gew.-%, bevorzugt 5 bis 50 Gew.-% und insbesondere 10 bis 40 Gew.-%. Als reinigungsaktive Enzymzubereitungen werden für die Reinigungsmittelzubereitung A insbesondere Enzym-Zubereitungen aus der Gruppe der Amylase-Zubereitungen eingesetzt. Analog werden für die Reinigungsmittelzubereitungen B beziehungsweise C als reinigungsaktive Enzymzubereitungen insbesondere Enzym-Zubereitungen aus der Gruppe der Protease- beziehungsweise Lipase-Zubereitungen eingesetzt. Unter Lipasen sind Lipasen im engeren Sinne (Glycerol-Fettsäureester spaltend) als auch Cutinasen, Phospholipasen sowie andere Fett- oder Wachshydrolysierende Enzyme zu verstehen.

Zusätzlich zu den genannten können in jeder der Zubereitungen weitere Enzyme enthalten sein. Zu den mit besonderem Vorzug eingesetzten Enzymen zählen dabei neben den genannten Proteasen, Amylasen und Lipasen auch Hemicellulasen, Cellulasen, Perhydrolasen oder Oxidoreduktasen, sowie deren Gemische.

Alle diese Enzyme sind im Prinzip natürlichen Ursprungs; ausgehend von den natürlichen Molekülen stehen für den Einsatz in Wasch- oder Reinigungsmitteln verbesserte Varianten zur Verfügung, die entsprechend bevorzugt eingesetzt werden.

Beispiele für erfindungsgemäß einsetzbare Amylasen sind die α-Amylasen aus *Bacillus licheniformis,* aus *B.amyloliquefaciens,* aus *B.stearothermophilus,* aus *Aspergillus niger* und *A.oryzae* sowie die für den Einsatz in Wasch- und Reinigungsmitteln verbesserten Weiterentwicklungen der vorgenannten Amylasen. Desweiteren sind für diesen Zweck die α-Amylase aus *Bacillus sp.* A 7-7 (DSM 12368) und die Cyclodextrin-Glucanotransferase (CGTase) aus *B.agaradherens* (DSM 9948) hervorzuheben.

Unter den Proteasen sind solche vom Subtilisin-Typ bevorzugt. Beispiele hierfür sind die Subtilisine BPN' und Carlsberg sowie deren weiterentwickelte Formen, die Protease PB92, die Subtilisine 147 und 309, die Alkalische Protease aus *Bacillus lentus,* Subtilisin DY und die den Subtilasen, nicht mehr jedoch den Subtilisinen im engeren Sinne zuzuordnenden Enzyme Thermitase, Proteinase K und die Proteasen TW3 und TW7.

Wasch- oder reinigungsaktive Proteasen und Amylasen werden in der Regel nicht in Form des reinen Proteins sondern vielmehr in Form stabilisierter, lager- und transportfähiger Zubereitungen bereitgestellt. Zu diesen vorkonfektionierten Zubereitungen zählen beispielsweise die durch Granulation, Extrusion oder Lyophilisierung erhaltenen festen Präparationen oder, insbesondere bei flüssigen oder gelförmigen Mitteln, Lösungen der Enzyme, vorteilhafterweise möglichst konzentriert, wasserarm und/oder mit Stabilisatoren oder weiteren Hilfsmitteln versetzt.

Wie aus der vorherigen Ausführungen ersichtlich, bildet das Enzym-Protein nur einen Bruchteil des Gesamtgewichts üblicher Enzym-Zubereitungen. Erfindungsgemäß bevorzugt eingesetzte Protease-, Amylase- und Lipase-Zubereitungen enthalten zwischen 0,1 und 40 Gew.-%, bevorzugt zwischen 0,2 und 30 Gew.-%, besonders bevorzugt zwischen 0,4 und 20 Gew.-% und insbesondere zwischen 0,8 und 10 Gew.-% des Enzymproteins. Die Proteinkonzentration kann mit Hilfe bekannter Methoden, zum Beispiel dem BCA-Verfahren oder dem Biuret-Verfahren bestimmt werden.

Erfindungsgemäß einsetzbar sind weiterhin Lipasen, insbesondere wegen ihrer Triglycerid-spaltenden Aktivitäten. Hierzu gehören beispielsweise die ursprünglich aus *Humicola lanuginosa* (*Thermomyces lanuginosus*) erhältlichen, beziehungsweise weiterentwickelten Lipasen, insbesondere solche mit einem oder mehreren der folgenden Aminosäureaustausche ausgehend von der genannten Lipase in den Positionen D96L, T213R und/oder N233R, besonders bevorzugt alle der Austausche D96L, T213R und N233R.

Weiterhin können Enzyme eingesetzt werden, die unter dem Begriff Hemicellulasen zusammengefasst werden. Hierzu gehören beispielsweise Mannanasen, Xanthanlyasen, Pektinlyasen (=Pektinasen), Pektinesterasen, Xyloglucanasen (=Xylanasen), Pullulanasen und β-Glucanasen.

Die Reinigungsmittelzubereitung C kann alternativ zu der oder den Enzymkomponente(n) oder auch zusätzlich mindestens ein nichtionisches Tensid enthalten. Bei den nichtionischen Tensiden sind nichtionische Tenside der allgemeinen Formel R¹-CH(OH)CH₂O-(AO)_{w}-(A'O)ₓ-(A'"O)_{y}-(A'"O)_{z}-R², in der
- R¹ für einen geradkettigen oder verzweigten, gesättigten oder ein- beziehungsweise mehrfach ungesättigten C₆₋₂₄-Alkyl- oder -Alkenylrest steht;
- R² für einen linearen oder verzweigten Kohlenwasserstoffrest mit 2 bis 26 Kohlenstoffatomen steht;
- A, A', A" und A'" unabhängig voneinander für einen Rest aus der Gruppe -CH₂CH₂, -CH₂CH₂-CH₂, -CH₂-CH(CH₃), -CH₂-CH₂-CH₂-CH₂, -CH₂-CH(CH₃)-CH₂-, -CH₂-C_{H}(CH₂-CH₃) stehen,
- w, x, y und z für Werte zwischen 0,5 und 120 stehen, wobei x, y und/oder z auch 0 sein können
bevorzugt.

Der Gewichtsanteil dieser nichtionischen Tenside beträgt in bevorzugten flüssigen Reinigungsmittelzubereitungen C, bezogen auf das Gesamtgewicht der Reinigungsmittelzubereitung B, 0,5 bis 30 Gew.-%, vorzugsweise 2,0 bis 25 Gew.-% und insbesondere 5,0 bis 20 Gew.-%.

Durch den Zusatz der vorgenannten nichtionischen Tenside der allgemeinen Formel R¹-CH(OH)CH₂O-(AO)_{w}-(A'O)ₓ-(A"O)_{y}-(A'"O)_{z}-R², nachfolgend auch als "Hydroxymischether" bezeichnet, kann die Reinigungsleistung Enzym-haltiger Zubereitungen deutlich verbessert werden und zwar sowohl im Vergleich zu Tensid-freien System wie auch im Vergleich zu Systemen, die alternative nichtionischen Tenside, beispielsweise aus der Gruppe der polyalkoxylierten Fettalkohole enthalten.

Durch den Einsatz dieser nichtionischen Tenside mit einer oder mehreren freien Hydroxylgruppe an einem oder beiden endständigen Alkylreste kann die Stabilität der in den erfindungsgemäßen Reinigungsmittelzubereitungen enthaltenen Enzyme deutlich verbessert werden.

Bevorzugt werden insbesondere solche endgruppenverschlossene poly(oxyalkylierten) Niotenside, die, gemäß der Formel R¹O[CH₂CH₂O]ₓCH₂CH(OH)R², neben einem Rest R¹, welcher für lineare oder verzweigte, gesättigte oder ungesättigte, aliphatische oder aromatische Kohlenwasserstoffreste mit 2 bis 30 Kohlenstoffatomen, vorzugsweise mit 4 bis 22 Kohlenstoffatomen steht, weiterhin einen linearen oder verzweigten, gesättigten oder ungesättigten, aliphatischen oder aromatischen Kohlenwasserstoffrest R² mit 1 bis 30 Kohlenstoffatomen aufweisen, wobei x für Werte zwischen 1 und 90, vorzugsweise für Werte zwischen 30 und 80 und insbesondere für Werte zwischen 30 und 60 steht.

Besonders bevorzugt sind Tenside der Formel R¹O[CH₂CH(CH₃)O]ₓ[CH₂CH₂O]_{y}CH₂CH(OH)R², in der R¹ für einen linearen oder verzweigten aliphatischen Kohlenwasserstoffrest mit 4 bis 18 Kohlenstoffatomen oder Mischungen hieraus steht, R² einen linearen oder verzweigten Kohlenwasserstoffrest mit 2 bis 26 Kohlenstoffatomen oder Mischungen hieraus bezeichnet und x für Werte zwischen 0,5 und 1,5 sowie y für einen Wert von mindestens 15 steht.

Zur Gruppe dieser nichtionischen Tenside zählen beispielsweise die C₂₋₂₆ Fettalkohol-(PO)₁-(EO)₁₅₋₄₀-2-hydroxyalkylether, insbesondere auch die C₈₋₁₀ Fettalkohol-(PO)₁(EO)₂₂-2-hydroxydecylether.

Besonders bevorzugt werden weiterhin solche endgruppenverschlossene poly(oxyalkylierten) Niotenside der Formel R¹O[CH₂CH₂O]ₓ[CH₂CH(R³)O]_{y}CH₂CH(OH)R², in der R¹ und R² unabhängig voneinander für einen linearen oder verzweigten, gesättigten oder ein- beziehungsweise mehrfach ungesättigten Kohlenwasserstoffrest mit 2 bis 26 Kohlenstoffatomen steht, R³ unabhängig voneinander ausgewählt ist aus -CH₃, -CH₂CH₃, -CH₂CH₂-CH₃, -CH(CH₃)₂, vorzugsweise jedoch für -CH₃ steht, und x und y unabhängig voneinander für Werte zwischen 1 und 32 stehen, wobei Niotenside mit R³ = -CH₃ und Werten für x von 15 bis 32 und y von 0,5 und 1,5 ganz besonders bevorzugt sind.

Weitere bevorzugt einsetzbare Niotenside sind die endgruppenverschlossenen poly(oxyalkylierten) Niotenside der Formel R¹O[CH₂CH(R³)O]ₓ[CH₂]ₖCH(OH)[CH₂]ⱼOR², in der R¹ und R² für lineare oder verzweigte, gesättigte oder ungesättigte, aliphatische oder aromatische Kohlenwasserstoffreste mit 1 bis 30 Kohlenstoffatomen stehen, R³ für H oder einen Methyl-, Ethyl-, n-Propyl-, iso-Propyl, n-Butyl-, 2-Butyl- oder 2-Methyl-2-Butylrest steht, x für Werte zwischen 1 und 30, k und j für Werte zwischen 1 und 12, vorzugsweise zwischen 1 und 5 stehen. Wenn der Wert x ≥ 2 ist, kann jedes R³ in der oben stehenden Formel R¹O[CH₂CH(R³)O]ₓ[CH₂]ₖCH(OH)[CH₂]ⱼOR² unterschiedlich sein. R¹ und R² sind vorzugsweise lineare oder verzweigte, gesättigte oder ungesättigte, aliphatische oder aromatische Kohlenwasserstoffreste mit 6 bis 22 Kohlenstoffatomen, wobei Reste mit 8 bis 18 C-Atomen besonders bevorzugt sind. Für den Rest R³ sind H, -CH₃ oder -CH₂CH₃ besonders bevorzugt. Besonders bevorzugte Werte für x liegen im Bereich von 1 bis 20, insbesondere von 6 bis 15.

Wie vorstehend beschrieben, kann jedes R³ in der oben stehenden Formel unterschiedlich sein, falls x ≥ 2 ist. Hierdurch kann die Alkylenoxideinheit in der eckigen Klammer variiert werden. Steht x beispielsweise für 3, kann der Rest R³ ausgewählt werden, um Ethylenoxid- (R³ = H) oder Propylenoxid- (R³ = CH₃) Einheiten zu bilden, die in jedweder Reihenfolge aneinandergefügt sein können, beispielsweise (EO)(PO)(EO), (EO)(EO)(PO), (EO)(EO)(EO), (PO)(EO)(PO), (PO)(PO)(EO) und (PO)(PO)(PO). Der Wert 3 für x ist hierbei beispielhaft gewählt worden und kann durchaus größer sein, wobei die Variationsbreite mit steigenden x-Werten zunimmt und beispielsweise eine große Anzahl (EO)-Gruppen, kombiniert mit einer geringen Anzahl (PO)-Gruppen einschließt, oder umgekehrt.

Besonders bevorzugte endgruppenverschlossene poly(oxyalkylierte) Alkohole der oben stehenden Formel weisen Werte von k = 1 und j = 1 auf, so dass sich die vorstehende Formel zu R¹O[CH₂CH(R³)O]ₓCH₂CH(OH)CH₂OR² vereinfacht. In der letztgenannten Formel sind R¹, R² und R³ wie oben definiert und x steht für Zahlen von 1 bis 30, vorzugsweise von 1 bis 20 und insbesondere von 6 bis 18. Besonders bevorzugt sind Tenside, bei denen die Reste R¹ und R² 9 bis 14 C-Atome aufweisen, R³ für H steht und x Werte von 6 bis 15 annimmt.

Als besonders wirkungsvoll haben sich schließlich die nichtionischen Tenside der allgemeine Formel R¹-CH(OH)CH₂O-(AO)_{w}-R² erwiesen, in der
- R¹ für einen geradkettigen oder verzweigten, gesättigten oder ein- beziehungsweise mehrfach ungesättigten C₆₋₂₄-Alkyl- oder -Alkenylrest steht;
- R² für einen linearen oder verzweigten Kohlenwasserstoffrest mit 2 bis 26 Kohlenstoffatomen steht;
- A für einen Rest aus der Gruppe CH₂CH₂, -CH₂CH₂-CH₂, -CH₂-CH(CH₃) steht, und
- w für Werte zwischen 1 und 120, vorzugsweise 10 bis 80, insbesondere 20 bis 40 steht.

Zur Gruppe dieser nichtionischen Tenside zählen beispielsweise die C₄₋₂₂ Fettalkohol-(EO)₁₀₋₈₀-2-hydroxyalkylether, insbesondere auch die C₈₋₁₂ Fettalkohol-(EO)₂₂-2-hydroxydecylether und die C₄₋₂₂ Fettalkohol-(EO)₄₀₋₈₀-2-hydroxyalkylether.

In verschiedenen Ausführungsformen können auch die anderen Reinigungsmittelzubereitungen A, B oder gegebenenfalls enthaltene weitere Zubereitungen ein oder mehrere der vorstehend beschriebenen Tenside enthalten.

Jede der Reinigungsmittelzubereitungen A, B und C sowie jede optional enthaltene weitere Zubereitung kann weitere, in Wasch- und Reinigungsmitteln übliche Bestandteile enthalten, sofern diese mit den enthaltenen Enzymkomponenten beziehungsweise Tensidkomponenten kompatibel sind.

Beispiele für derartige Bestandteile schließen ein, aber sind nicht beschränkt auf Gerüststoffe. Der Gewichtsanteil der Gerüststoffe am Gesamtgewicht der Reinigungsmittelzubereitungen beträgt typischerweise 15 bis 60 Gew.-%, bevorzugt 20 bis 50 Gew.-%.

Zur Gruppe der Gerüststoffe zählen nach Maßgabe der vorliegenden Anmeldung die organischen Komplexbildner ebenso wie die Alkaliträger und die reinigungsaktiven anionischen Polymere.

Die Gruppe der organischen Komplexbildner schließt insbesondere Polycarboxylate / Polycarbonsäuren, polymere Carboxylate, Asparaginsäure, Polyacetale, Dextrine und weitere organische Cobuilder wie die Phosphonate ein. Diese Stoffklassen werden nachfolgend beschrieben.

Brauchbare organische Komplexbildner sind beispielsweise die in Form der freien Säure und/oder ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Ethylendiamindibernsteinsäure, Glutarsäure, Äpfelsäure, Weinsäure, Maleinsäure, Fumarsäure, Zuckersäuren, Nitrilotriessigsäure (NTA), Aminocarbonsäuren (insbesondere Methylglycindiessigsäure (MGDA) oder Glutamin-N,N-diessigsäure sowie deren Salze) und deren Abkömmlinge sowie Mischungen aus diesen sofern ein derartiger Einsatz aus ökologischen, toxikologischen oder vergleichbaren Gründen nicht zu beanstanden ist. Die freien Säuren besitzen neben ihrer Builderwirkung typischerweise auch die Eigenschaft einer Säuerungskomponente und dienen somit auch zur Einstellung eines niedrigeren und milderen pH-Werts von Wasch- oder Reinigungsmitteln. Insbesondere sind hierbei Citronensäure, Bernsteinsäure, Glutarsäure, Adipinsäure, Gluconsäure und beliebige Mischungen aus diesen zu nennen.

Ebenso sind als weitere bevorzugte Buildersubstanzen polymere Aminodicarbonsäuren, deren Salze oder deren Vorläufersubstanzen zu nennen. Bevorzugt sind Polyasparaginsäuren beziehungsweise deren Salze. Besonders bevorzugt sind Methylglycindiessigsäure (MGDA) oder Glutamin-N,N-diessigsäure sowie deren Salze.

Auch Oxydisuccinate und andere Derivate von Disuccinaten, vorzugsweise Ethylendiamindisuccinat, sind weitere geeignete Cobuilder. Dabei wird Ethylendiamin-N,N'-disuccinat (EDDS) bevorzugt in Form seiner Natrium- oder Magnesiumsalze verwendet. Weiterhin bevorzugt sind in diesem Zusammenhang auch Glycerindisuccinate und Glycerintrisuccinate.

Weitere brauchbare organische Komplexbildner sind beispielsweise acetylierte Hydroxycarbonsäuren beziehungsweise deren Salze, welche gegebenenfalls auch in Lactonform vorliegen können und welche mindestens 4 Kohlenstoffatome und mindestens eine Hydroxygruppe sowie maximal zwei Säuregruppen enthalten.

Besonders bevorzugt können in mindestens einer den genannten Reinigungsmittelzubereitungen A, B oder C, insbesondere C, als eines ihrer wesentlichen Gerüststoffe ein oder mehrere Salze der Citronensäure, also Citrate. Diese sind vorzugsweise in einem Anteil von 2 bis 40 Gew.-%, insbesondere von 5 bis 30 Gew.-%, besonders von 7 bis 20 Gew.-% bezogen auf das Gesamtgewicht der einzelnen Reinigungsmittelzubereitung von 100 Gew.-% enthalten.

Besonders bevorzugt sind in mindestens einer der genannten Reinigungsmittelzubereitungen A, B oder C, insbesondere in C, mindestens zwei Gerüststoffe aus der Gruppe der Aminocarboxylate, Carbonate und Citrate enthalten, wobei der Gewichtsanteil dieser Gerüststoffe, bezogen auf das Gesamtgewicht der Reinigungsmittelzubereitung, bevorzugt 5 bis 60 Gew.-%, vorzugsweise 15 bis 50 Gew.-% und insbesondere 25 bis 40 Gew.-% beträgt. Insbesondere werden als Aminocarboxylate, bevorzugt MGDA und/oder GLDA bzw. deren Salze eingesetzt. Hierbei beträgt die enthaltene Menge an Aminocarboxylat(en) insgesamt in der jeweiligen Reinigungsmittelzubereitung, insbesondere in Reinigungsmittelzubereitung C, vorzugsweise 2 bis 40 Gew.-%, insbesondere 5 bis 30 Gew.-%, vor allem 7 bis 20 Gew.-% bezogen auf das Gesamtgewicht der jeweiligen Reinigungsmittelzubereitung. Die Kombination von zwei oder mehr Gerüststoffen aus der oben genannten Gruppe hat sich für die Reinigungs- und Klarspülleistung erfindungsgemäßer maschineller Geschirrspülmittel als vorteilhaft erwiesen.

Die komplexbildenden Phosphonate bilden eine Gruppe weiterer in den erfindungsgemäßen Reinigungsmittelzubereitungen einsetzbarer organischen Komplexbildner, wobei diese Gruppe neben der 1-Hydroxyethan-1,1-diphosphonsäure eine Reihe unterschiedlicher Verbindungen wie beispielsweise Diethylentriaminpenta(methylenphosphonsäure) (DTPMP) umfasst. Bevorzugt sind insbesondere Hydroxyalkan- beziehungsweise Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, zum Beispiel als Hexanatriumsalz der EDTMP beziehungsweise als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schwermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Eine zweite Gruppe der Gerüststoffe bilden die Alkaliträger. Zur Gruppe der Alkaliträger zählen dabei die Carbonate und/oder Hydrogencarbonate ebenso wie die Alkalimetallhydroxide. Die Gruppe der Carbonate und Hydrogencarbonate wird im Rahmen dieser Anmeldung durch die Bezeichnung (Hydrogen)carbonat zusammengefasst.

Zur Erhöhung beziehungsweise Einstellung der Alkalität können die Reinigungsmittelzubereitungen Alkalimetallhydroxid(e) enthalten.

Die erfindungsgemäßen Reinigungsmittelzubereitungen können zusätzlich zu den zuvor beschriebenen Gerüststoffen weitere Gerüststoffe enthalten. Ein Beispiel für entsprechende Gerüststoffe sind die Phosphate, die in den Reinigungsmittelzubereitungen vorzugsweise in Form der Alkalimetallphosphate unter besonderer Bevorzugung von Pentanatrium- beziehungsweise Pentakaliumtriphosphat (Natrium- beziehungsweise Kaliumtripolyphosphat) eingesetzt werden können.

Erfindungsgemäß bevorzugte Reinigungsmittelzubereitungen enthalten aber weniger als 10 Gew.-%, besonders bevorzugt weniger als 5 Gew.-% und insbesondere weniger als 2 Gew.-% Phosphat. Phosphat-freie Reinigungsmittelzubereitungen werden erfindungsgemäß ganz besonders bevorzugt. Bevorzugt werden weiterhin solche erfindungsgemäßen Wasch- oder Reinigungsmittelzubereitungen, die weniger als 2 Gew.-%, vorzugsweise weniger als 1 Gew.-% und insbesondere weniger als 0,5 Gew.-% Silikat enthalten. Sowohl die Absenkung des Phosphatgehalts als auch die Absenkung des Silikatgehalts haben sich als für die Stabilität als vorteilhaft erwiesen.

Die reinigungsaktiven anionischen Polymere bilden eine dritte Gruppe der in den hierin beschriebenen Reinigungsmittelzubereitungen enthaltenen Gerüststoffe.

Die reinigungsaktiven anionischen Polymere können zwei, drei, vier oder mehr unterschiedliche Monomereinheiten aufweisen. Die Gruppe dieser Polymere umfasst neben den homo- und copolymeren Polycarboxylaten unter anderem auch die copolymeren Polysulfonate, die neben einem Monomer aus der Gruppe der ungesättigten Carbonsäuren mindestens ein weiteres Monomer aus der Gruppe der ungesättigten Sulfonsäuren aufweisen.

Die polymeren Polycarboxylate bilden eine erste Gruppe reinigungsaktiver anionischer Polymere. Beispiele für derartige Polymere sind die Alkalimetallsalze der Polyacrylsäure oder der Polymethacrylsäure, beispielsweise solche mit einer relativen Molekülmasse von 500 bis 70.000 g/mol.

Geeignete anionische Polymere sind insbesondere Polyacrylate, die bevorzugt eine Molekülmasse von 2.000 bis 20.000 g/mol aufweisen. Aufgrund ihrer überlegenen Löslichkeit können aus dieser Gruppe wiederum die kurzkettigen Polyacrylate, die Molmassen von 2.000 bis 10.000 g/mol, und besonders bevorzugt von 3.000 bis 5.000 g/mol, aufweisen, bevorzugt sein.

Geeignet sind weiterhin copolymere Polycarboxylate, insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 2.000 bis 70.000 g/mol, vorzugsweise 20.000 bis 50.000 g/mol und insbesondere 30.000 bis 40.000 g/mol.

Bevorzugte copolymere Polysulfonate enthalten neben Sulfonsäuregruppen-haltigem(n) Monomer(en) wenigstens ein Monomer aus der Gruppe der ungesättigten Carbonsäuren.

Als ungesättigte Carbonsäure(n) wird/werden mit besonderem Vorzug ungesättigte Carbonsäuren der Formel R¹(R²)C=C(R³)COOH eingesetzt, in der R¹ bis R³ unabhängig voneinander für-H, -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder-COOH substituierte Alkyl- oder Alkenylreste wie vorstehend definiert oder für -COOH oder - COOR⁴ steht, wobei R⁴ ein gesättigter oder ungesättigter, geradkettigter oder verzweigter Kohlenwasserstoffrest mit 1 bis 12 Kohlenstoffatomen ist.

Besonders bevorzugte ungesättigte Carbonsäuren sind Acrylsäure, Methacrylsäure, Ethacrylsäure, α-Chloroacrylsäure, α-Cyanoacrylsäure, Crotonsäure, α-Phenyl-Acrylsäure, Maleinsäure, Maleinsäureanhydrid, Fumarsäure, Itaconsäure, Citraconsäure, Methylenmalonsäure, Sorbinsäure, Zimtsäure oder deren Mischungen. Einsetzbar sind selbstverständlich auch die ungesättigten Dicarbonsäuren.

Bei den Sulfonsäuregruppen-haltigen Monomeren sind solche der Formel

R⁵(R⁶)C=C(R⁷)-X-SO₃H

bevorzugt, in der R⁵ bis R⁷ unabhängig voneinander für-H, -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl- oder Alkenylreste oder für -COOH oder -COOR⁴ steht, wobei R⁴ ein gesättigter oder ungesättigter, geradkettigter oder verzweigter Kohlenwasserstoffrest mit 1 bis 12 Kohlenstoffatomen ist, und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂-, -C(O)-NH-C(CH₃)₂-CH₂- und -C(O)-NH-CH(CH₂CH₃)-.

Unter diesen Monomeren bevorzugt sind solche der Formeln

H₂C=CH-X-SO₃H

H₂C=C(CH₃)-X-SO₃H

HO₃S-X-(R⁶)C=C(R⁷)-X-SO₃H,

in denen R⁶ und R⁷ unabhängig voneinander ausgewählt sind aus -H, -CH₃, -CH₂CH₃,-CH₂CH₂CH₃, -CH(CH₃)₂ und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂-, -C(O)-NH-C(CH₃)₂-CH₂- und -C(O)-NH-CH(CH₂CH₃)-.

Besonders bevorzugte Sulfonsäuregruppen-haltige Monomere sind dabei 1-Acrylamido-1-propansulfonsäure, 2-Acrylamido-2-propansulfonsäure, 2-Acrylamido-2-methyl-1-propansulfonsäure, 2-Methacrylamido-2-methyl-1-propansulfonsäure, 3-Methacrylamido-2-hydroxy-propansulfonsäure, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen1-sulfonsäure, Styrolsulfonsäure, Vinylsulfonsäure, 3-Sulfopropylacrylat, 3-Sulfopropylmethacrylat, Sulfomethacrylamid, Sulfomethylmethacrylamid sowie Mischungen der genannten Säuren oder deren wasserlösliche Salze.

In den Polymeren können die Sulfonsäuregruppen ganz oder teilweise in neutralisierter Form vorliegen, das heißt dass das acide Wasserstoffatom der Sulfonsäuregruppe in einigen oder allen Sulfonsäuregruppen gegen Metallionen, vorzugsweise Alkalimetallionen und insbesondere gegen Natriumionen, ausgetauscht sein kann. Der Einsatz von teil- oder vollneutralisierten sulfonsäuregruppenhaltigen Copolymeren ist erfindungsgemäß bevorzugt.

In einer weiteren bevorzugten Ausführungsform umfassen die Copolymere neben Carboxylgruppenhaltigem Monomer und Sulfonsäuregruppen-haltigen Monomer weiterhin wenigstens ein nichtionisches, vorzugsweise hydrophobes Monomer.

Als nichtionische Monomere werden vorzugsweise Monomere der allgemeinen Formel R¹(R²)C=C(R³)-X-R⁴ eingesetzt, in der R¹ bis R³ unabhängig voneinander für-H, -CH₃ oder -C₂H₅ steht, X für eine optional vorhandene Spacergruppe steht, die ausgewählt ist aus -CH₂-, -C(O)O- und -C(O)-NH-, und R⁴ für einen geradkettigen oder verzweigten gesättigten Alkylrest mit 2 bis 22 Kohlenstoffatomen oder für einen ungesättigten, vorzugsweise aromatischen Rest mit 6 bis 22 Kohlenstoffatomen steht.

Besonders bevorzugte nichtionische Monomere sind Buten, Isobuten, Penten, 3-Methylbuten, 2-Methylbuten, Cyclopenten, Hexen, Hexen-1, 2-Methlypenten-1, 3-Methlypenten-1, Cyclohexen, Methylcyclopenten, Cyclohepten, Methylcyclohexen, 2,4,4-Trimethylpenten-1, 2,4,4-Trimethylpenten-2, 2,3-Dimethylhexen-1, 2,4-Diemthylhexen-1, 2,5-Dimethlyhexen-1, 3,5-Dimethylhexen-1, 4,4-Dimehtylhexan-1, Ethylcyclohexyn, 1-Octen, α-Olefine mit 10 oder mehr Kohlenstoffatomen wie beispielsweise 1-Decen, 1-Dodecen, 1-Hexadecen, 1-Oktadecen und C22-α-Olefin, 2-Styrol, α-Methylstyrol, 3-Methylstyrol, 4-Propylstryol, 4-Cyclohexylstyrol, 4-Dodecylstyrol, 2-Ethyl-4-Benzylstyrol, 1-Vinylnaphthalin, 2,Vinylnaphthalin, Acrylsäuremethylester, Acrylsäureethylester, Acrylsäurepropylester, Acrylsäurebutylester, Acrylsäurepentylester, Acrylsäurehexylester, Methacrylsäuremethylester, N-(Methyl)acrylamid, Acrylsäure-2-Ethylhexylester, Methacrylsäure-2-Ethylhexylester, *N*-(2-Ethylhexyl)acrylamid, Acrylsäureoctylester, Methacrylsäureoctylester, *N*-(Octyl)acrylamid, Acrylsäurelaurylester, Methacrylsäurelaurylester, *N*-(Lauryl)acrylamid, Acrylsäurestearylester, Methacrylsäurestearylester, *N*-(Stearyl)-acrylamid, Acrylsäurebehenylester, Methacrylsäurebehenylester und *N*-(Behenyl)-acrylamid oder deren Mischungen.

Die Reinigungsmittelzubereitungen, insbesondere solche, die keine Enzymkomponente enthalten, können ferner als Bestandteil mindestens ein Sauerstoffbleichmittel enthalten. Unter den als Bleichmittel dienenden, in Wasser H₂O₂ liefernden Verbindungen haben das Natriumpercarbonat, das Natriumperborattetrahydrat und das Natriumperboratmonohydrat besondere Bedeutung. Weitere brauchbare Bleichmittel sind beispielsweise Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure. Weiterhin können auch Bleichmittel aus der Gruppe der organischen Bleichmittel eingesetzt werden. Typische organische Bleichmittel sind die Diacylperoxide, wie zum Beispiel Dibenzoylperoxid. Weitere typische organische Bleichmittel sind die Peroxysäuren, wobei als Beispiele besonders die Alkylperoxysäuren und die Arylperoxysäuren genannt werden.

Besonders bevorzugt wird als Sauerstoffbleichmittel Wasserstoffperoxid eingesetzt. Eine Sauerstoffbleichmittel-haltige Reinigungsmittelzubereitung kann durch Zusatz von Zinnverbindungen, Phosphonaten oder Radikalfängern stabilisiert werden.

Ein weiterer Bestandteil der erfindungsgemäß einsetzbaren Reinigungsmittelzubereitungen ist ein organisches Lösungsmittel. Bevorzugte organische Lösungsmittel stammen aus der Gruppe ein- oder mehrwertigen Alkohole, Alkanolamine oder Glykolether. Vorzugsweise werden die Lösungsmittel ausgewählt aus Ethanol, n- oder i-Propanol, Butanol, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Etheylenglykolmono-n-butylether, Diethylenglykolmethylether, Di-ethylenglykolethylether, Propylenglykolmethyl-, -ethyl- oder -propylether, Dipropylenglykolmethyl-, oder -ethylether, Methoxy-, Ethoxy- oder Butoxytriglykol, 1-Butoxyethoxy-2-propanol, 3-Methyl-3-methoxybutanol, Propylen-glykol-t-butylether sowie Mischungen dieser Lösungsmittel. Der Gewichtsanteil dieser organischen Lösungsmittel am Gesamtgewicht der Reinigungsmittelzubereitungen beträgt vorzugsweise 5 bis 80 Gew.-%, bevorzugt 8 bis 60 Gew.-% und insbesondere 10 bis 50 Gew.-%.

Neben den weiter oben beschriebenen Inhaltsstoffen wie Enzymen, nichtionischen Tensiden aus der Gruppe der Hydroxymischether, Lösungsmitteln, Gerüststoffen und Bleichmitteln können die Reinigungsmittelzubereitungen weitere Inhaltsstoffe, beispielsweise Wirkstoffe aus der Gruppe der wasch- und reinigungsaktiven Polymere, der Korrosionsinhibitoren, der Duft- oder Farbstoffe enthalten.

Die Reinigungsmittelangebotsform kann dadurch gekennzeichnet sein, dass die Reinigungsmittelzubereitungen A, B und C voneinander getrennt in einer gemeinsamen Kartusche vorliegen.

Die zuvor beschriebenen Reinigungsmittelzubereitungen A, B und C unterscheiden sich hinsichtlich ihrer Zusammensetzung, sind also nicht identisch.

Die Konfektionierung der zuvor beschriebenen Kombination von Reinigungsmitteln erfolgt in Form voneinander getrennter Aufnahmekammern, wobei jede dieser Aufnahmekammern eines der miteinander kombinierten Reinigungsmittel enthält. Beispiele für derartige Konfektionsformen sind Kartuschen mit zwei, drei, vier oder mehr voneinander getrennten Aufnahmekammern, beispielsweise Zwei-, Drei-, Vier- oder Mehrkammerflaschen. Durch die Trennung der Reinigungsmittel unterschiedlicher Zusammensetzung können unerwünschte Reaktionen aufgrund chemischer Unverträglichkeit ausgeschlossen werden.

Die Dosierung der erfindungsgemäßen Reinigungsmittelzubereitungen erfolgt vorzugsweise mittels eines speziellen Dosiersystems. In einer bevorzugten Ausführungsform werden die zuvor beschriebenen Kartuschen der Reinigungsmittelangebotsformen mit einer von der Kartusche lösbaren Dosiergerät versehen. Ein solches Dosiergerät kann mit der Kartusche beispielsweise mittels einer Haft-, Rast-, Schnapp- oder Steckverbindung verbunden sein. Durch die Trennung von Kartusche und Dosiergerät wird beispielsweise die Befüllung der Kartusche vereinfacht. Alternativ ermöglich die lösbare Verbindung von Kartusche und Dosiergerät den Austausch der Kartuschen an dem Dosiergerät. Ein solcher Austausch kann beispielsweise bei einer Änderung des Reinigungsprogramms oder nach der vollständigen Leerung der Kartusche angezeigt sein.

Ein solches Reinigungsmitteldosiersystem kann die zuvor beschriebenen Reinigungsmittelzubereitungen, sowie eine Kartusche für die Reinigungsmittelzubereitungen, in welcher die Reinigungsmittelzubereitungen in voneinander getrennten Aufnahmekammern vorliegen; und ein mit der Kartusche verbundenes oder verbindbares Dosiergerät umfassen. Die Kartusche und das Dosiergerät sind vorzugsweise lösbar miteinander verbunden, können jedoch auch unlösbar miteinander verbunden sein.

Die vorgenannten Reinigungsmitteldosiersysteme, umfassend erfindungsgemäße Reinigungsmittelzubereitungen, eine Kartusche und ein lösbar oder unlösbar mit der Kartusche verbundenes Dosiergerät liegen in einer bevorzugten Ausführungsform in einer gemeinsamen Umverpackung vor, wobei die befüllte Kartusche und das Dosiergerät besonders bevorzugt getrennt voneinander in der Umverpackung enthalten sind. Die Umverpackung dient der Lagerung, dem Transport und der Präsentation der erfindungsgemäßen Reinigungsmitteangebotsform und schütz diese vor Verschmutzung, Schlag und Stoß. Insbesondere zum Zweck der Präsentation sollte die Umverpackung wenigstens anteilsweise transparent ausgestaltet sein.

Alternativ oder in Ergänzung zu einer Umverpackung kann die Reinigungsmittelangebotsform in Verbindung mit einem wasserführenden Haushaltsgerät, wie zum Beispiel einer Geschirrspülmaschine, vermarktet werden. Eine solche Kombination ist insbesondere in den Fällen vorteilhaft, in denen der Verlauf des maschinellen Geschirrspülverfahrens (zum Beispiel Dauer, Temperaturverlauf, Wasserzufuhr) und die Reinigungsmittelrezeptur beziehungsweise die Steuerelektronik des Dosiergeräts aufeinander abgestimmt sind.

Das Dosiersystem besteht aus den Grundbauelementen einer erfindungsgemäßen Reinigungsmittelangebotsform und einem mit der Kartusche kuppelbarem Dosiergerät, welches wiederum aus weiteren Baugruppen, wie beispielsweise Bauelementträger, Aktuator, Verschlusselement, Sensor, Energiequelle und/oder Steuereinheit, gebildet ist. Es ist bevorzugt, dass das Dosiersystem beweglich ist. Beweglich im Sinne dieser Anmeldung bedeutet, dass das Dosiersystem nicht unlösbar mit einer wasserführenden Vorrichtung wie beispielsweise einer Geschirrspülmaschine, Waschmaschine, Wäschetrockner oder dergleichen verbunden ist, sondern beispielsweise aus einer Geschirrspülmaschine durch den Benutzer entnehmbar oder in einer Geschirrspülmaschine positionierbar, also eigenständig handhabbar, ist.

Gemäß einer alternativen Ausgestaltung ist es auch denkbar, dass das Dosiergerät für den Benutzer nicht lösbar mit einer wasserführenden Vorrichtung wie beispielsweise einer Geschirrspülmaschine, Waschmaschine, Wäschetrockner oder dergleichen verbunden ist und lediglich die Kartusche beweglich ist.

Unter einer Kartusche im Sinne dieser Anmeldung wird ein Packmittel verstanden, das dazu geeignet ist, fließfähige oder streufähige Zubereitungen zu umhüllen oder zusammenzuhalten und das zur Abgabe der Zubereitung an ein Dosiergerät koppelbar ist.

Insbesondere kann eine Kartusche auch mehrere Kammern umfassen, die mit voneinander verschiedenen Zusammensetzungen befüllbar sind. Auch ist es denkbar, dass eine Behältermehrzahl zu einer Kartuscheneinheit angeordnet wird.

In einer weiteren Ausgestaltung ist die Kartusche einstückig ausgebildet. Hierdurch lassen sich die Kartuschen, insbesondere durch geeignete Blasformverfahren, kostengünstig in einem Herstellungsschritt ausbilden. Die Kammern einer Kartusche können hierbei beispielsweise durch Stege oder Materialbrücken voneinander separiert sein. Die Kartusche kann auch mehrstückig durch in einem Spritzguss hergestellte und anschließend zusammengefügte Bauteile gebildet sein. Ferner ist es denkbar, dass die Kartusche in derart mehrstückig ausgeformt ist, dass wenigstens eine Kammer, vorzugsweise alle Kammern, einzeln aus dem Dosiergerät entnehmbar oder in das Dosiergerät einsetzbar sind. Hierdurch ist es möglich, bei einem unterschiedlich starken Verbrauch einer Zubereitung aus einer Kammer, eine bereits entleerte Kammer auszutauschen, während die übrigen, die noch mit Zubereitung befüllt sein können, in dem Dosiergerät verbleiben. Somit kann ein gezieltes und bedarfsgerechtes Nachfüllen der einzelnen Kammern beziehungsweise deren Zubereitungen erreicht werden.

Die Kammern einer Kartusche können durch geeignete Verbindungsmethoden aneinander fixiert sein, so dass eine Behältereinheit gebildet ist. Die Kammern können durch eine geeignete formschlüssige, kraftschlüssige oder stoffschlüssige Verbindung lösbar oder unlösbar gegeneinander fixiert sein. Insbesondere kann die Fixierung durch eine oder mehrere der Verbindungsarten aus der Gruppe der Snap-In Verbindungen, Klettverbindungen, Pressverbindungen, Schmelzverbindungen, Klebverbindungen, Schweißverbindungen, Lötverbindungen, Schraubverbindungen, Keilverbindungen, Klemmverbindungen oder Prellverbindungen erfolgen. Insbesondere kann die Fixierung auch durch einen Schrumpfschlauch (so genannte Sleeve) ausgebildet sein, der in einem erwärmten Zustand über die gesamte oder Abschnitte der Kartusche gezogen wird und die Kammern beziehungsweise die Kartusche im abgekühlten Zustand fest umschließt.

Um vorteilhafte Restentleerungseigenschaften der Kammern bereitzustellen, kann der Boden der Kammern trichterförmig zur Abgabeöffnung hin geneigt sein. Des Weiteren kann die Innenwand einer Kammer durch geeignete Materialwahl und/oder Oberflächenausgestaltung in derart ausgebildet sein, dass eine geringe Materialanhaftung der Zubereitung an der inneren Kammerwand realisiert ist. Auch durch diese Maßnahme lässt sich die Restentleerbarkeit einer Kammer weiter optimieren.

Die Kammern einer Kartusche können gleiche oder voneinander verschiedene Füllvolumina aufweisen. Bei einer Konfiguration mit zwei Kammern beträgt das Verhältnis der Behältervolumina bevorzugt 5:1, bei einer Konfiguration mit drei Kammern bevorzugt 5:1:1, wobei diese Konfigurationen insbesondere zur Verwendung in Geschirrspülmaschinen geeignet sind.

Die Kartusche weist üblicherweise ein Füllvolumen von < 5.000 ml, insbesondere < 2.000 ml, vorzugsweise zwischen 10 und 1.500 ml, bevorzugt zwischen 50 und 900 ml, und insbesondere zwischen 250 und 800 ml auf.

Die Kartusche kann jede beliebige Raumform annehmen. Sie kann beispielsweise würfelartig, kugelförmig oder plattenartig ausgebildet sein.

Üblicherweise sind handelsübliche Geschirrspülmaschinen in derart konzipiert, dass die Anordnung von größerem Spülgut, wie etwa Pfannen oder große Teller, in dem unteren Geschirrkorb der Geschirrspülmaschine vorgesehen ist. Um eine nicht optimale Positionierung des Dosiersystems durch den Benutzer in dem oberen Geschirrkorb zu vermeiden, ist in einer vorteilhaften Ausgestaltung der Erfindung das Dosiersystem derart dimensioniert, dass eine Positionierung des Dosiersystems lediglich in den dafür vorgesehenen Aufnahmen des unteren Geschirrkorbs ermöglicht ist. Hierzu können die Breite und die Höhe des Dosiersystems insbesondere zwischen 150 mm und 300 mm, besonders bevorzugt zwischen 175 mm und 250 mm gewählt sein.

Es ist jedoch auch denkbar, die Dosiereinheit in Becherform mit einer im Wesentlichen kreisrunden oder quadratischen Grundfläche auszubilden.

In dem Dosiergerät sind die zum Betrieb notwendige Steuereinheit, Sensoreinheit sowie wenigstens ein Aktuator integriert. Bevorzugt ist ebenfalls eine Energiequelle in dem Dosiergerät angeordnet.

Vorzugsweise besteht das Dosiergerät aus einem spritzwassergeschütztem Gehäuse, dass das Eindringen von Spritzwasser, wie es beispielsweise bei der Verwendung in einer Geschirrspülmaschine auftreten kann, in das Innere des Dosiergeräts verhindert.

Es ist besonders bevorzugt, dass das Dosiergerät wenigstens eine erste Schnittstelle umfasst, welche in oder an einem wasserführendem Gerät wie insbesondere ein wasserführendes Haushaltsgerät, bevorzugt eine Geschirrspülmaschine oder eine Waschmaschine ausgebildeten korrespondierenden Schnittstelle in derart zusammenwirkt, dass eine Übertragung von elektrischer Energie von dem wasserführenden Gerät zum Dosiergerät verwirklicht ist.

In einer Ausgestaltung der Erfindung sind die Schnittstellen durch Steckverbinder ausgebildet. In einer weiteren Ausgestaltung können die Schnittstellen in derart ausgebildet sein, dass eine drahtlose Übertragung von elektrischer Energie bewirkt ist.

In einer vorteilhaften Weiterentwicklung der Erfindung ist jeweils eine zweite Schnittstelle an dem Dosiergerät und dem wasserführenden Gerät, wie etwa einer Geschirrspülmaschine, zur Übertragung von elektromagnetischen Signalen, welche insbesondere Betriebszustands-, Mess- und/oder Steuerinformationen des Dosiergeräts und/oder des wasserführenden Geräts wie einer Geschirrspülmaschine repräsentieren, ausgebildet.

Durch einen Adapter kann eine einfache Kopplung des Dosiersystems mit einem wasserführendem Haushaltsgerät realisiert. Der Adapter dient der mechanischen und/oder elektrischen Verbindung des Dosiersystems mit dem wasserführenden Haushaltsgerät.

Der Adapter ist, bevorzugt fest, mit einer wasserführenden Leitung des Haushaltsgeräts verbunden. Es ist jedoch auch denkbar, den Adapter für eine Positionierung in dem oder an dem Haushaltsgerät vorzusehen, in der der Adapter vom Wasserfluss und/oder Sprühstrahl des Haushaltsgeräts erfasst ist.

Durch den Adapter wird es möglich ein Dosiersystem sowohl für eine autarke als auch "build-in" Version auszuführen. Auch ist es möglich, den Adapter als eine Art Aufladestation für das Dosiersystem auszubilden, in der beispielsweise die Energiequelle des Dosiergeräts aufgeladen wird oder Daten zwischen dem Dosiergerät und dem Adapter ausgetauscht werden.

Der Adapter kann in einer Geschirrspülmaschine an einer der inneren Wände der Spülkammer, insbesondere an der inneren Seite der Geschirrspülmaschinentür, angeordnet sein. Es ist jedoch auch denkbar, dass der Adapter als solches nicht zugänglich für den Benutzer in dem wasserführenden Haushaltsgerät positioniert ist, so dass das Dosiergerät beispielsweise während der Montage mit des Haushaltsgeräts in den Adapter eingesetzt wird, wobei der Adapter, das Dosiergerät und das Haushaltsgerät in derart ausgebildet sind, dass eine Kartusche vom Benutzer mit dem Dosiergerät gekoppelt werden kann.

Die beschriebenen Reinigungsmittelangebotsformen eignen sich für die Dosierung mittels eines in dem Innenraum einer Geschirrspülmaschine befindlichen Dosiersystems. Ein derartiges Dosiersystem, das unbeweglich in den Innenraum der Geschirrspülmaschine integriert sein kann (Maschinen-integriertes Dosiergerät) aber selbstverständlich auch als bewegliche Vorrichtung in den Innenraum eingebracht werden kann (autarkes Dosiergerät), enthält die mehrfache zur Durchführung eines maschinellen Reinigungsverfahrens benötigte Menge des Reinigungsmittels.

Beweglich im Sinne dieser Anmeldung bedeutet, dass das Abgabe- und Dosiersystem nicht unlösbar mit einer Vorrichtung wie beispielsweise einer Geschirrspülmaschine, Waschmaschine, Wäschetrockner oder dergleichen verbunden ist, sondern beispielsweise aus einer Geschirrspülmaschine entnehmbar oder in einer Geschirrspülmaschine positionierbar ist.

Zusammenfassend eignen sich sowohl die Reinigungsmittelkombinationen als auch die Reinigungsmittelangebotsformen als Nachfüllpackungen für unbeweglich in den Innenraum einer Geschirrspülmaschine integrierte Dosiergeräte als auch für zur Positionierung in dem Innenraum einer Geschirrspülmaschine vorgesehene bewegliche Dosiergeräte.

Noch ein anderer Aspekt der Erfindung betrifft die Verwendung einer hierin beschriebenen Reinigungsmittelangebotsform beziehungsweise eines hierin beschriebenen Reinigungsmitteldosiersystems als Reinigungsmittelreservoir für ein wasserführendes Haushaltsgeräts. Dabei kann das Dosiersystem i) ein unbeweglich in den Innenraum eines wasserführenden Haushaltsgeräts integriertes Dosiergerät oder ii) ein für die Positionierung in dem Innenraum eines wasserführenden Haushaltsgeräts vorgesehenes bewegliches Dosiergerät sein.

Weiterhin wird ein Computerprogrammprodukt vorgeschlagen, welches auf einer programmgesteuerten Einrichtung die Durchführung zumindest eines Schritts des wie oben erläuterten Verfahrens veranlasst.

Ein Computerprogrammprodukt, wie zum Beispiel ein Computerprogramm-Mittel, kann beispielsweise als Speichermedium, wie zum Beispiel Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

### Es zeigen

- Fig. 1: eine Perspektivansicht einer Ausführungsform eines wasserführenden Haushaltsgeräts;
- Fig. 2: ein schematisches Blockdiagramm einer Ausführungsform einer Vorrichtung zur Bestimmung einer Anschmutzung von Spülgut in dem wasserführenden Haushaltsgerät;
- Fig. 3: eine erste Anordnung der Vorrichtung zur Bestimmung einer Anschmutzung von Spülgut in dem Spülbehälter des wasserführenden Haushaltsgeräts;
- Fig. 4: eine zweite Anordnung der Vorrichtung zur Bestimmung einer Anschmutzung von Spülgut in dem Spülbehälter des wasserführenden Haushaltsgeräts;
- Fig. 5: eine dritte Anordnung der Vorrichtung zur Bestimmung einer Anschmutzung von Spülgut in dem Spülbehälter des wasserführenden Haushaltsgeräts;
- Fig. 6: eine vierte Anordnung der Vorrichtung zur Bestimmung einer Anschmutzung von Spülgut in dem Spülbehälter des wasserführenden Haushaltsgeräts;
- Fig. 7: eine fünfte Anordnung der Vorrichtung zur Bestimmung einer Anschmutzung von Spülgut in dem Spülbehälter des wasserführenden Haushaltsgeräts;
- Fig. 8: ein Ausführungsbeispiel eines Verfahrens zur Bestimmung einer Anschmutzung von Spülgut in dem wasserführenden Haushaltsgerät;
- Fig. 9: ein Ausführungsbeispiel eines Verfahrens zum Reinigen von Geschirr oder Textilien in einem wasserführenden Haushaltsgerät.

In den Figuren sind gleiche oder funktionsgleiche Elemente mit denselben Bezugszeichen versehen worden, sofern nichts anderes angegeben ist.

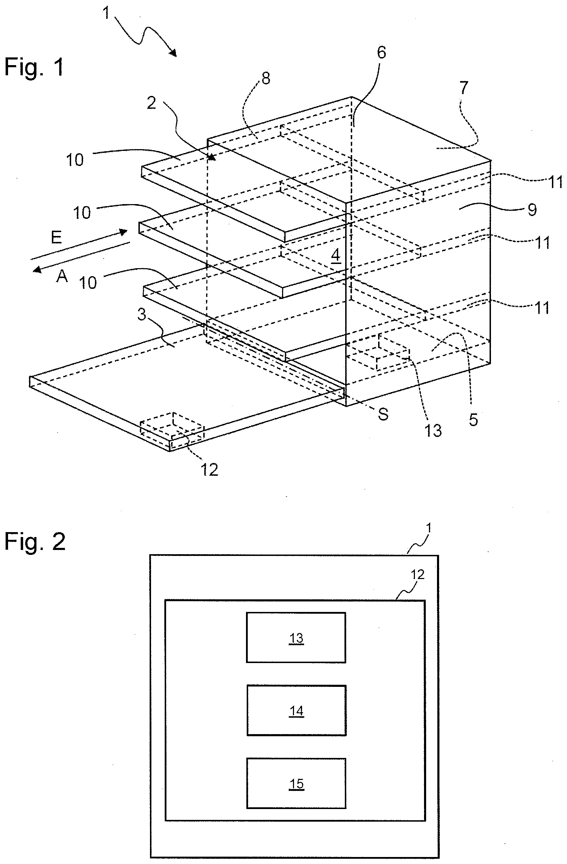

Die Fig. 1 zeigt eine Perspektivansicht einer ersten Ausführungsform eines wasserführenden Haushaltsgeräts 1, insbesondere einer Geschirrspülmaschine oder einer Waschmaschine. Im Folgenden wird beispielhaft eine Geschirrspülmaschine beschrieben. Die beschriebenen Elemente und Funktionen sind, soweit anwendbar, analog auf eine Waschmaschine übertragbar.

Die Geschirrspülmaschine 1 weist einen einen Spülbehälter 2 umfassenden Korpus sowie eine Tür 3 auf. Der Spülbehälter 2 und die Tür 3 bilden eine Spülkammer 4 zum Spülen von Spülgut. Die Tür 3 ist in Fig. 1 in ihrer geöffneten Stellung gezeigt. Durch Schwenken um eine an einem unteren Ende der Tür 3 vorgesehene Schwenkachse S kann die Tür 3 geschlossen oder geöffnet werden.

Der Spülbehälter 2 ist beispielsweise quaderförmig und kann einen Boden 5, eine dem Boden 5 gegenüberliegende Decke 6, eine der Tür 3 gegenüberliegende Rückwand 7 und zwei einander gegenüberliegende Seitenwände 8, 9 umfassen. Insbesondere die Seitenwände 8, 9 können aus Edelstahlblech gefertigt sein.

Die Geschirrspülmaschine 1 weist weiterhin zumindest eine Beladungsebene 10 auf. Die zumindest eine Beladungsebene 10 ist vorzugsweise eine Spülgutaufnahme der Geschirrspülmaschine 1. Insbesondere können mehrere Beladungsebenen 10 vorgesehen sein, welche einen Unterkorb, einen Oberkorb und/oder eine Besteckschublade umfassen können. Die mehreren Beladungsebenen 10 sind vorzugsweise übereinander in dem Spülbehälter 2 angeordnet. Jede Beladungsebene 10 ist wahlweise in einer Einschubrichtung E (Pfeil) in den Spülbehälter 2 hinein oder in einer Auszugsrichtung A (Pfeil) aus diesem heraus verlagerbar. Hierzu ist bevorzugt zu beiden Seiten einer jeweiligen Beladungsebene 10 eine Schiene 11 vorgesehen.

Eine wahlweise in dem Korpus oder in der Tür 3 der Geschirrspülmaschine 1 vorgesehene Steuerungsvorrichtung 12 ist dazu eingerichtet, den Ablauf von Spülprogrammen zum Spülen von Spülgut zu steuern. Die Steuerungsvorrichtung 12 kann eine Vorrichtung 12 zur Bestimmung einer Anschmutzung des Spülguts aufweisen, wie sie beispielsweise in Fig. 2 beschrieben ist.

Des Weiteren ist ein Sensor 13 abgebildet, welcher an verschiedenen Stellen der Geschirrspülmaschine 1 eingesetzt sein kann. Der Sensor 13 dient dazu, eine Nahinfrarotspektroskopie durchzuführen, um organische Verbindungen in dem Spülwasser der Geschirrspülmaschine 1 zu erfassen.

Die Steuerungsvorrichtung 12 ist dazu eingerichtet, den Sensor 13 und gegebenenfalls eine Anzahl von weiteren Sensoren und/oder Aktoren des Haushaltsgeräts 1 zu betreiben.

Die Fig. 2 zeigt ein schematisches Blockdiagramm einer Ausführungsform einer Vorrichtung 12 zur Bestimmung einer Anschmutzung von Spülgut in dem wasserführenden Haushaltsgerät, beispielsweise einer Geschirrspülmaschine 1.

Die Vorrichtung 12 weist einen Sensor 13, eine Bestimmungseinheit 14 und eine Anpassungseinheit 15 auf.

Der Sensor 13 führt eine Nahinfrarotspektroskopie, im Folgenden NIR-Messung genannt, durch, um organische Verbindungen in dem Spülwasser der Geschirrspülmaschine 1 zu erfassen. Die Bestimmungseinheit 14 kann basierend auf den erfassten organischen Verbindungen eine Anschmutzung des Spülguts bestimmen.

Die Anpassungseinheit 15 kann die Informationen über die Anschmutzung dazu verwenden, Spülparameter eines aktuellen Spülprogramms anzupassen, oder bereits vorhandene, gespeicherte Spülprogramme anzupassen. Dazu kann die Anpassungseinheit 15 auch eine automatische Dosierung durch eine Dosiereinheit 22 anpassen.

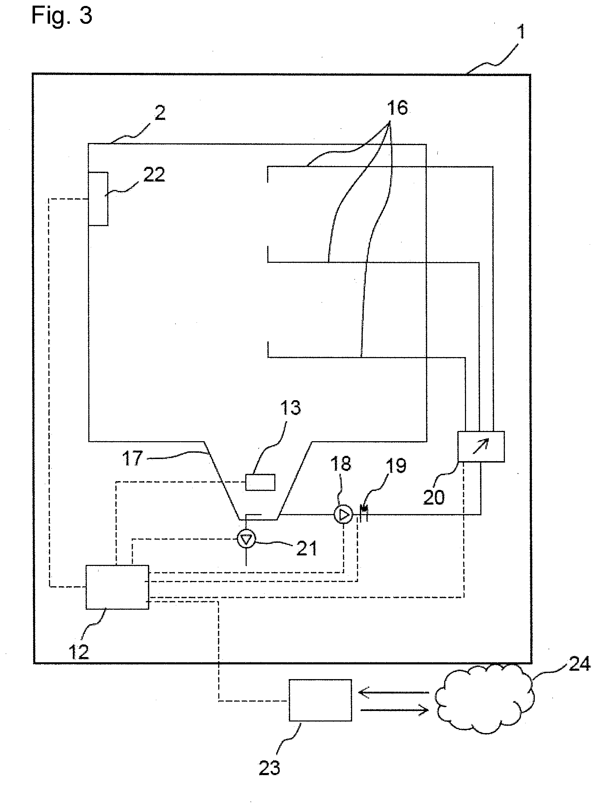

Der Sensor 13 kann an verschiedenen Stellen der Geschirrspülmaschine 1 angeordnet sein, wie nun mit Bezugnahme auf die Figuren 3 bis 7 beschrieben wird.

Die Fig. 3 zeigt eine erste Anordnung der Vorrichtung 12 zur Bestimmung einer Anschmutzung von Spülgut in dem Spülbehälter 2 der Geschirrspülmaschine 1.

In dieser Anordnung befindet sich der Sensor 13 in dem Pumpensumpf 17 unterhalb der verschiedenen Sprühebenen 16. Dies führt zu einer hohen Genauigkeit der Messung, da dies eine eher beruhigte Zone ist. Die Steuereinrichtung beziehungsweise Vorrichtung 12 zur Bestimmung der Anschmutzung nimmt die Daten vom Sensor 13 auf (punktuell oder permanent) und gleicht diese mit einem hinterlegten Kalibrationsmodell und anschließend mit vorgegebenen Schwellenwerten ab. Auf Basis der vordefinierten Logik werden die Entscheidungen für das laufende Programm getroffen. Dabei können folgende Einheiten gesteuert werden: die Umwälzpumpe 18, die Heizeinheit 19 zur Umwälzpumpe 18, die Wasserweiche 20, die Laugenpumpe 21 oder die Dosiereinheit 22 für Pulver, Mono und/oder Multifunktionstabs, Klarspüler und/oder Einzelkomponenten eines Reinigersystems. Die Vorrichtung 12 kann zusätzlich über eine Internet-Kommunikationseinheit 23 mit einer Datenbank auf einem externen Server 24 verbunden sein.

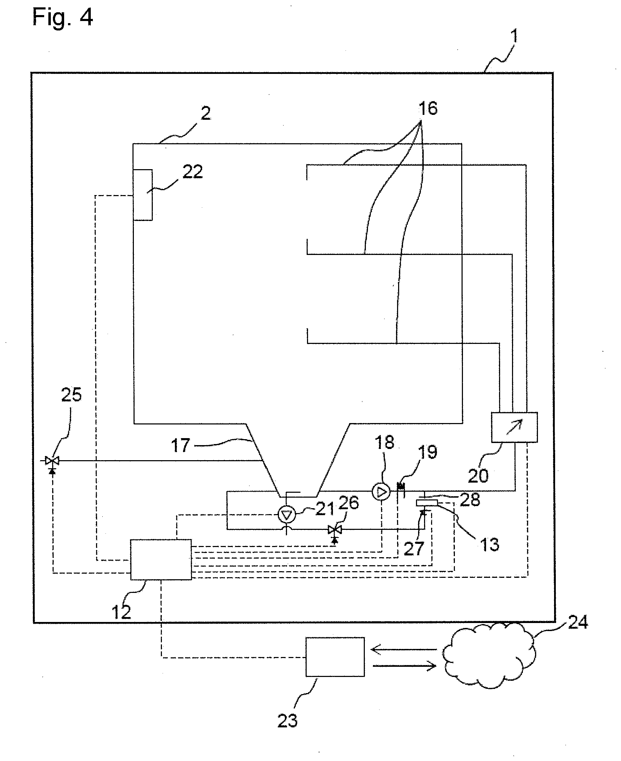

Die Fig. 4 zeigt eine zweite Anordnung der Vorrichtung 12 zur Bestimmung der Anschmutzung von Spülgut in dem Spülbehälter 2 der Geschirrspülmaschine 1.

In dieser Anordnung befindet sich der Sensor 13 in einem Bypass nach der Umwälzpumpe 18 und das Spülwasser wird durch den Sensor 13 hindurch wieder in den Behälter 2 oder Pumpensumpf 3 (beispielsweise unterhalb des Siebsystems) zurückgeführt. Optional kann der Bypass über ein Ventil 26 "gesperrt" und geöffnet werden. Die Flotte befindet sich dabei im Ruhezustand, es besteht also keinerlei Strömung.

Die Anbringung des Sensors 13 kann dabei so gewählt sein, dass sich Feststoffteilchen bei geschlossenem Ventil 26, das heißt ohne Fließströmung, nach unten absetzen können. Zusätzlich kann in die Messstrecke eine Heiz- und/oder Kühlvorrichtung 27 eingebaut sein. Weiterhin können über einen Filter 28 Feststoffe abgefiltert werden, sodass sie eine Messung nicht stören. Bei normalem Fließstrom kann der Filter 28 in Richtung der Wasserweiche 20 gereinigt werden. Zusätzlich kann die Vorrichtung 12 in dieser Anordnung das Frischwasser 25 steuern.

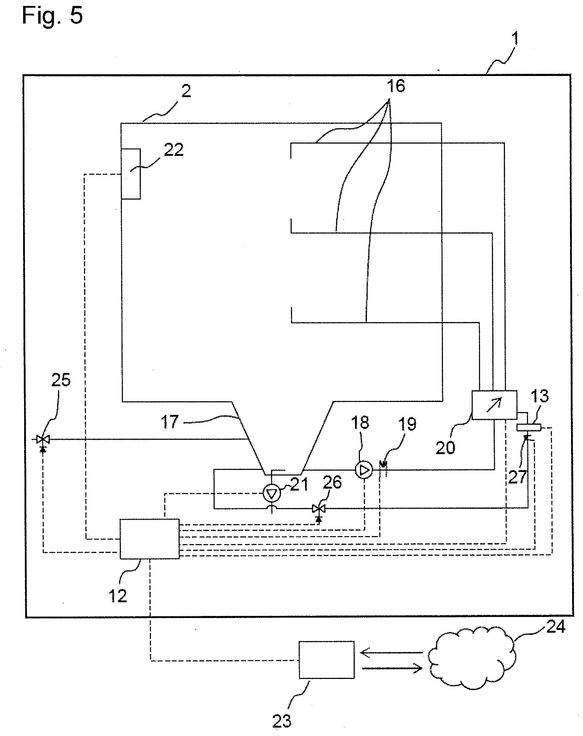

Die Fig. 5 zeigt eine dritte Anordnung der Vorrichtung 12 zur Bestimmung der Anschmutzung von Spülgut in dem Spülbehälter 2 der Geschirrspülmaschine 1.

Wie bei der Anordnung von Fig. 4 befindet sich der Sensor 13 in einem Bypass. Hier wird jedoch der Anschluss für den Flottenspeicher an der Wasserweiche 20 genutzt.

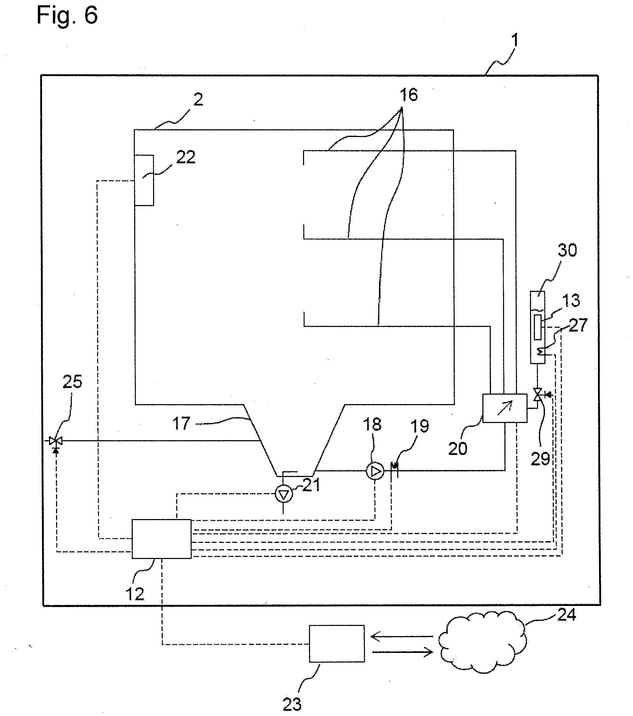

Die Fig. 6 zeigt eine vierte Anordnung der Vorrichtung 12 zur Bestimmung der Anschmutzung von Spülgut in dem Spülbehälter 2 der Geschirrspülmaschine 1.

Bei der Anordnung von Fig. 6 ist ein Messgehäuse 30 mit einem vorgeschalteten Ventil 29 vorgesehen, in dem der Sensor 13 untergebracht ist. Die Flotte kann somit strömungsberuhigt vorliegen und zusätzlich über eine Einheit 27 geheizt oder gekühlt werden.

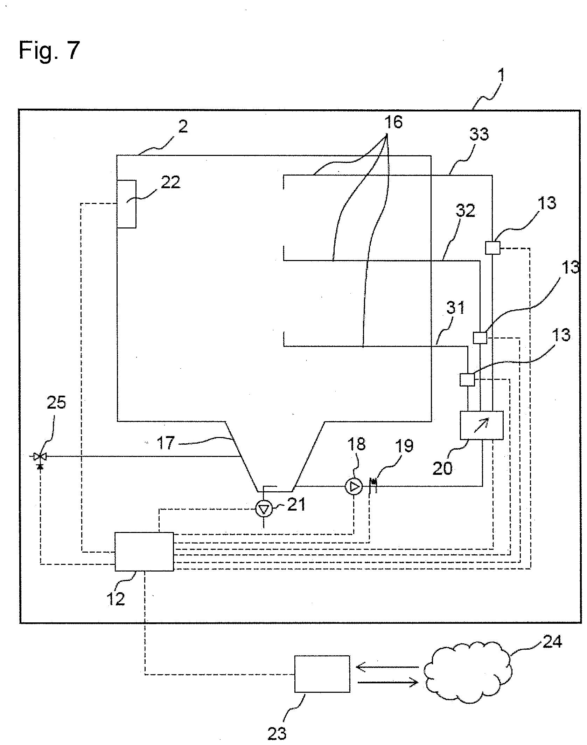

Die Fig. 7 zeigt eine fünfte Anordnung der Vorrichtung 12 zur Bestimmung der Anschmutzung von Spülgut in dem Spülbehälter 2 der Geschirrspülmaschine 1.

Bei dieser Anordnung werden mehrere Sensoren 13 in die Zuführung 31, 32, 33 der verschiedenen Sprühebenen 16 positioniert.

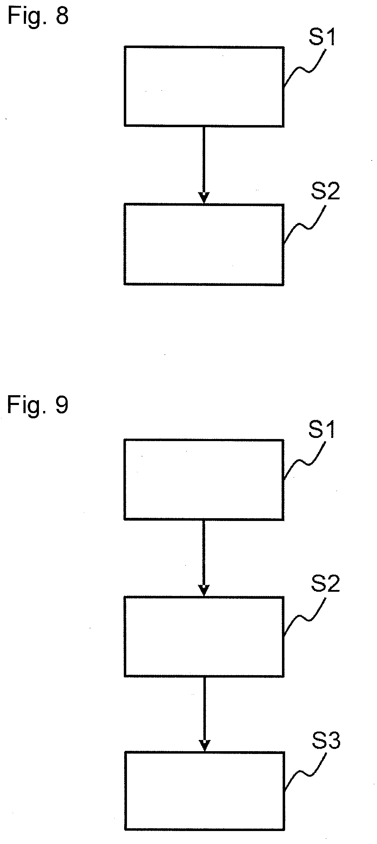

Die Fig. 8 zeigt ein Ausführungsbeispiel eines Verfahrens zur Bestimmung einer Anschmutzung von Spülgut in dem wasserführenden Haushaltsgerät 1.

In Schritt S1 werden organischen Verbindungen in dem Spülwasser des wasserführenden Haushaltsgeräts 1 unter Verwendung einer Nahinfrarotspektroskopie erfasst.

In Schritt S2 wird die Anschmutzung des Spülguts basierend auf den erfassten organischen Verbindungen bestimmt.

Die Fig. 9 zeigt ein Ausführungsbeispiel eines Verfahrens zum Reinigen von Geschirr oder Textilien in einem wasserführenden Haushaltsgerät 1, insbesondere in einer Geschirrspülmaschine oder in einer Waschmaschine.

In Schritt S1 werden spektrale Messwerte von Schmutzkomponenten in einer Spül- oder Waschflotte in dem wasserführenden Haushaltsgerät 1 unter Verwendung einer Nahinfrarotspektroskopie erfasst.

In Schritt S2 wird die Schmutzfracht der Spül- oder Waschflotte basierend auf den erfassten spektralen Messwerten der Schmutzkomponenten bestimmt.

Und in Schritt S3 werden Spülparameter eines aktuellen Spülprogramms basierend auf der bestimmten Schmutzfracht angepasst.

Alternativ wird in Schritt S3 ein Waschmittel oder Reinigungsmittel basierend auf der bestimmten Schmutzfracht dosiert, vorzugsweise in die Spül- oder Waschflotte in dem wasserführenden Haushaltsgeräts 1.

Obwohl die vorliegende Erfindung anhand von Ausführungsbeispielen beschrieben wurde, ist sie vielfältig modifizierbar.

### Verwendete Bezugszeichen

- 1: Wasserführendes Haushaltsgerät
- 2: Spülbehälter
- 3: Tür
- 4: Spülkammer
- 5: Boden
- 6: Decke
- 7: Rückwand
- 8: Seitenwand
- 9: Seitenwand
- 10: Beladungsebene
- 11: Schiene
- 12: Steuerungsvorrichtung (Vorrichtung zur Bestimmung der Anschmutzung)
- 13: Sensor
- 14: Bestimmungseinheit
- 15: Anpassungseinheit
- 16: Sprühebene
- 17: Pumpentopf mit Sumpf
- 18: Umwälzpumpe
- 19: Heizeinheit zur Umwälzpumpe
- 20: Wasserweiche
- 21: Laugenpumpe
- 22: Dosiereinheit
- 23: Kommunikationsschnittstelle
- 24: Externer Server mit Datenbank
- 25: Frischwasser
- 26: Ventil
- 27: Heiz-/Kühleinheit
- 28: Filter
- 29: Ventil
- 30: Messgehäuse
- 31: Zuführung zur unteren Sprühebene
- 32: Zuführung zur mittleren Sprühebene
- 33: Zuführung zur oberen Sprühebene

- A: Auszugsrichtung (Pfeil)
- E: Einschubrichtung (Pfeil)
- S: Schwenkachse
- S1: Verfahrensschritt
- S2: Verfahrensschritt
- S3: Verfahrensschritt

## Patentansprüche

1. Vorrichtung (12) zur Bestimmung der Schmutzfracht in einer Spül- oder Waschflotte in einem wasserführenden Haushaltsgerät (1), insbesondere in einer Geschirrspülmaschine oder in einer Waschmaschine, mit
- einem Sensor (13) zum Erfassen von spektralen Messwerten von Schmutzkomponenten in der Spül- oder Waschflotte in dem wasserführenden Haushaltsgerät (1) unter Verwendung einer Nahinfrarotspektroskopie, wobei der Sensor (13) insbesondere dazu eingerichtet ist, eine Transmissionsmessung und/oder eine Reflexionsmessung durchzuführen,
- einer Bestimmungseinheit (14) zum Bestimmen der Schmutzfracht der Spül- oder Waschflotte basierend auf den erfassten spektralen Messwerten der Schmutzkomponenten in der Spül- oder Waschflotte und
- einer Anpassungseinheit (15) zum Anpassen von Spülparametern eines aktuellen Spülprogramms basierend auf der bestimmten Schmutzfracht,
**dadurch gekennzeichnet,**
**dass** die Bestimmungseinheit (14) dazu eingerichtet ist, Ausgangsdaten des Sensors (13) mit einem vordefinierten Kalibrationsmodell zu vergleichen.

2. Vorrichtung (12) nach Anspruch 1, **dadurch gekennzeichnet, dass** die Bestimmungseinheit (14) dazu eingerichtet ist, bei der Bestimmung der Schmutzfracht eine Mehrzahl von verschiedenen Schmutzkomponenten innerhalb der Schmutzfracht zu bestimmen.

3. Vorrichtung (12) nach Anspruch 1 oder 2, **dadurch gekennzeichnet, dass** das Kalibrationsmodell eine Mehrzahl von unterschiedlichen spektralen Informationen mit zugeordneten organischen Verbindungen enthält.

4. Vorrichtung (12) nach Anspruch 1, 2 oder 3, **dadurch gekennzeichnet, dass** der Sensor (13) dazu eingerichtet ist, die organischen Verbindungen bei einer definierten Temperatur und/oder unter Verwendung eines Korrekturfaktors zu erfassen.

5. Vorrichtung (12) nach einem der Ansprüche 1 bis 4, **dadurch gekennzeichnet, dass** der Sensor (13) in einem Pumpensumpf (17) des wasserführenden Haushaltsgeräts (1) oder in einer Bypass-Anordnung innerhalb und/oder außerhalb eines Spülbehälters (2) des wasserführenden Haushaltsgeräts (1) angeordnet ist.

6. Wasserführendes Haushaltsgerät (1) mit einer Vorrichtung (12) nach einem der Ansprüche 1 bis 5 zur Bestimmung der Schmutzfracht in einer Spül- oder Waschflotte in dem wasserführenden Haushaltsgerät (1).

7. Wasserführendes Haushaltsgerät (1) nach Anspruch 6, **dadurch gekennzeichnet, dass** die Vorrichtung (12) zur Bestimmung einer Anschmutzung von Spülgut dazu eingerichtet ist, mit einem externen Server (24) zu kommunizieren.

8. Wasserführendes Haushaltsgerät (1) nach Anspruch 7, **dadurch gekennzeichnet, dass** die Vorrichtung (12) zur Bestimmung einer Anschmutzung von Spülgut dazu eingerichtet ist, die erfassten organischen Verbindungen und/oder die bestimmte Anschmutzung des Spülguts an den externen Server (24) zu übermitteln.

9. Verfahren zur Bestimmung der Schmutzfracht in einer Spül- oder Waschflotte in einem wasserführenden Haushaltsgerät (1), insbesondere in einer Geschirrspülmaschine oder in einer Waschmaschine, umfassend:
- Erfassen (S1) von spektralen Messwerten von Schmutzkomponenten in der Spül- oder Waschflotte in dem wasserführenden Haushaltsgerät (1) unter Verwendung einer Nahinfrarotspektroskopie,
- Bestimmen (S2) der Schmutzfracht der Spül- oder Waschflotte basierend auf den erfassten spektralen Messwerten der Schmutzkomponenten und
- Vergleichen der Ausgangsdaten mit einem vordefinierten Kalibrationsmodell.

10. Verfahren zum Reinigen von Geschirr oder Textilien in einem wasserführenden Haushaltsgerät (1), insbesondere in einer Geschirrspülmaschine oder in einer Waschmaschine, umfassend:
- Erfassen (S1) von spektralen Messwerten von Schmutzkomponenten in einer Spül- oder Waschflotte in dem wasserführenden Haushaltsgerät (1) unter Verwendung einer Nahinfrarotspektroskopie,
- Bestimmen (S2) der Schmutzfracht der Spül- oder Waschflotte basierend auf den erfassten spektralen Messwerten der Schmutzkomponenten,
- Vergleichen der Ausgangsdaten mit einem vordefinierten Kalibrationsmodell und
- Anpassen (S3) von Spülparametern eines aktuellen Spülprogramms basierend auf der bestimmten Schmutzfracht.

11. Verfahren zum Reinigen von Geschirr oder Textilien in einem wasserführenden Haushaltsgerät (1), insbesondere in einer Geschirrspülmaschine oder in einer Waschmaschine, umfassend:
- Erfassen (S1) von spektralen Messwerten von Schmutzkomponenten in einer Spül- oder Waschflotte in dem wasserführenden Haushaltsgerät (1) unter Verwendung einer Nahinfrarotspektroskopie,
- Bestimmen (S2) der Schmutzfracht der Spül- oder Waschflotte basierend auf den erfassten spektralen Messwerten der Schmutzkomponenten,
- Vergleichen der Ausgangsdaten mit einem vordefinierten Kalibrationsmodell und
- Dosieren (S3) eines Waschmittels oder Reinigungsmittels basierend auf der bestimmten Schmutzfracht.

12. Verfahren nach Anspruch 11, **dadurch gekennzeichnet, dass** das Waschmittel oder Reinigungsmittel eine Mehrkomponenten-Reinigungsmittelangebotsform umfassend mindestens zwei, vorzugsweise alle drei von:
a) einer vorzugsweise flüssige Reinigungsmittelzubereitung A, enthaltend mindestens einen Bestandteil mit Reinigungswirkung auf stärkehaltige Anschmutzungen, insbesondere eine Amylase,
b) einer vorzugsweise flüssige Reinigungsmittelzubereitung B, enthaltend mindestens einen Bestandteil mit Reinigungswirkung auf proteinhaltige Anschmutzungen, insbesondere eine Protease und
c) einer vorzugsweise flüssige Reinigungsmittelzubereitung C, enthaltend mindestens einen Bestandteil mit Reinigungswirkung auf fetthaltige Anschmutzungen, insbesondere eine Lipase oder mindestens ein nichtionisches Tensid
umfasst und das Dosieren derart erfolgt, dass eine oder mehrere der Reinigungsmittelzubereitungen A bis C basierend auf der Art und Menge der bestimmten Schmutzkomponenten zudosiert wird/werden.

13. Verwendung einer Mehrkomponenten-Reinigungsmittelangebotsform umfassend mindestens zwei, vorzugsweise alle drei von:
a) einer vorzugsweise flüssige Reinigungsmittelzubereitung A, enthaltend mindestens einen Bestandteil mit Reinigungswirkung auf stärkehaltige Anschmutzungen, insbesondere eine Amylase,
b) einer vorzugsweise flüssige Reinigungsmittelzubereitung B, enthaltend mindestens einen Bestandteil mit Reinigungswirkung auf proteinhaltige Anschmutzungen, insbesondere eine Protease und
c) einer vorzugsweise flüssige Reinigungsmittelzubereitung C, enthaltend mindestens einen Bestandteil mit Reinigungswirkung auf fetthaltige Anschmutzungen, insbesondere eine Lipase oder mindestens ein nichtionisches Tensid
in einem Verfahren zum Reinigen von Geschirr oder Textilien in einem wasserführenden Haushaltsgerät (1), insbesondere in einer Geschirrspülmaschine oder in einer Waschmaschine, gemäß einem der Ansprüche 1 bis 8.

14. Verfahren nach Anspruch 12 oder Verwendung gemäß Anspruch 13, **dadurch gekennzeichnet, dass** die Mehrkomponenten-Reinigungsmittelangebotsform in Form voneinander getrennter Aufnahmekammern, wobei jede dieser Aufnahmekammern eine der Reinigungsmittelzubereitungen enthält, konfektioniert ist, wobei die Konfektionsform vorzugsweise eine Kartusche mit zwei, drei, vier oder mehr voneinander getrennten Aufnahmekammern ist.

15. Verfahren oder Verwendung nach Anspruch 14, **dadurch gekennzeichnet, dass** das Waschmittel oder Reinigungsmittel über ein Dosiersystem zur Mehrfachdosierung von Waschmittel und Reinigungsmitteln zudosiert wird, wobei das Dosiersystem die Reinigungsmittelzubereitungen A bis C, eine Kartusche für die Reinigungsmittelzubereitungen, in welcher die Reinigungsmittelzubereitungen in voneinander getrennten Aufnahmekammern vorliegen, und ein mit der Kartusche verbundenes oder verbindbares Dosiergerät umfasst.

## Claims

1. Device (12) for determining the dirt load in a rinsing or detergent solution in a water-conducting household appliance (1), in particular in a dishwasher or in a washing machine, comprising
- a sensor (13) for acquiring spectral measured values of dirt components in the rinsing or detergent solution in the water-conducting household appliance (1) using near-infrared spectroscopy, wherein the sensor (13) in particular is designed to carry out a transmission measurement and/or a reflection measurement,
- a determination unit (14) for determining the dirt load of the rinsing or detergent solution based on the acquired spectral measured values of the dirt components in the rinsing or detergent solution, and
- an adjustment unit (15) for adjusting wash parameters of a current wash program on the basis of the dirt load determined,
**characterised in that**
the determination unit (14) is designed to compare output data of the sensor (13) with a predefined calibration model.

2. Device (12) according to claim 1, **characterised in that,** for determining the dirt load, the determination unit (14) is designed to determine a plurality of different dirt components within the dirt load.

3. Device (12) according to claim 1 or 2, **characterised in that** the calibration model contains a plurality of different items of spectral information with associated organic compounds.

4. Device (12) according to claim 1, 2 or 3, **characterised in that** the sensor (13) is designed to measure the organic compounds at a defined temperature and/or using a correction factor.

5. Device (12) according to one of claims 1 to 4, **characterised in that** the sensor (13) is disposed in a pump sump (17) of the water-conducting household appliance (1) or in a bypass arrangement inside and/or outside a wash tub (2) of the water-conducting household appliance (1).

6. Water-conducting household appliance (1) incorporating a device (12) according to one of claims 1 to 5 for determining the dirt load in a rinsing or detergent solution in the water-conducting household appliance (1).

7. Water-conducting household appliance (1) according to claim 6, **characterised in that** the device (12) for determining a soiling of wash items is designed to communicate with an external server (24).

8. Water-conducting household appliance (1) according to claim 7, **characterised in that** the device (12) for determining a soiling of wash items is designed to communicate the detected organic compounds and/or the particular soiling of the wash items to the external server (24).

9. Method for determining the dirt load in a rinsing or detergent solution in a water-conducting household appliance (1), in particular in a dishwasher or in a washing machine, comprising:
- acquisition (S1) of spectral measured values of dirt components in the rinsing or detergent solution in the water-conducting household appliance (1) using near-infrared spectroscopy,
- determination (S2) of the dirt load of the rinsing or detergent solution on the basis of the acquired spectral measured values of the dirt components and
- comparison of the output data with a predefined calibration model.

10. Method for washing dishes or fabrics in a water-conducting household appliance (1), in particular in a dishwasher or in a washing machine, comprising:
- acquisition (S1) of spectral measured values of dirt components in a rinsing or detergent solution in the water-conducting household appliance (1) using near-infrared spectroscopy,
- determination (S2) of the dirt load of the rinsing or detergent solution on the basis of the acquired spectral measured values of the dirt components,
- comparison of the output data with a predefined calibration model and
- adjustment (S3) of wash parameters of a current wash program on the basis of the dirt load determined.

11. Method for washing dishes or fabrics in a water-conducting household appliance (1), in particular in a dishwasher or in a washing machine, comprising:
- acquisition (S1) of spectral measured values of dirt components in a rinsing or detergent solution in the water-conducting household appliance (1) using near-infrared spectroscopy,
- determination (S2) of the dirt load of the rinsing or detergent solution on the basis of the acquired spectral measured values of the dirt components,
- comparison of the output data with a predefined calibration model and
- dosing (S3) of a detergent on the basis of the dirt load determined.

12. Method according to claim 11, **characterised in that** the detergent comprises a multi-component detergent product format comprising at least two, preferably all three of:
a) a preferably liquid detergent formulation A, containing at least one constituent having a detergent action on starchy soilings, in particular an amylase;
b) a preferably liquid detergent formulation B, containing at least one constituent having a detergent action on protein soilings, in particular a protease; and
c) a preferably liquid detergent formulation C, containing at least one constituent having a detergent action on fatty soilings, in particular a lipase or at least one non-ionic surfactant
and the dosing takes place such that one or more of the detergent formulations A to C is/are dispensed on the basis of the type and amount of dirt components determined.

13. Use of a multi-component detergent product format comprising at least two, preferably all three of:
a) a preferably liquid detergent formulation A, containing at least one constituent having a detergent action on starchy soilings, in particular an amylase;
b) a preferably liquid detergent formulation B, containing at least one constituent having a detergent action on protein soilings, in particular a protease; and
c) a preferably liquid detergent formulation C, containing at least one constituent having a detergent action on fatty soilings, in particular a lipase or at least one non-ionic surfactant
in a method for washing dishes or fabrics in a water-conducting household appliance (1), in particular in a dishwasher or in a washing machine, according to one of claims 1 to 8.

14. Method according to claim 12 or use according to claim 13, **characterised in that** the multi-component detergent product format is packaged in the form of separate accommodation compartments, wherein each of these compartments contains one of the detergent formulations, wherein the format is preferably a cartridge having two, three, four or more separate accommodation compartments.

15. Method or use according to claim 14, **characterised in that** the detergent is dispensed via a dosing system for multiple dosing of detergents, wherein the dosing system comprises the detergent formulations A to C, a cartridge for the detergent formulations, the detergent formulations being provided in separate accommodation compartments therein, and a dosing device that is connected or can be connected to the cartridge.

## Revendications

1. Dispositif (12) pour la détermination de la charge en salissures d'un bain de lavage ou de nettoyage dans un appareil ménager à circulation d'eau (1), en particulier dans un lave-vaisselle ou dans un lave-linge, comprenant
- un capteur (13) pour l'acquisition de valeurs de mesure spectrales de composants de salissure dans le bain de lavage ou de nettoyage dans l'appareil à circulation d'eau (1) en utilisant une spectroscopie proche infrarouge, dans lequel le capteur (13) est en particulier aménagé afin d'exécuter une mesure de transmission et/ou une mesure de réflexion,
- une unité de détermination (14) pour la détermination de la charge en salissures du bain de lavage ou de nettoyage sur la base des valeurs de mesure spectrales des composants de salissure acquises dans le bain de lavage ou de nettoyage et
- une unité d'adaptation (15) pour l'adaptation de paramètres de lavage d'un programme de lavage actuel sur la base de la charge en salissures déterminée, **caractérisé en ce que** l'unité de détermination (14) est aménagée afin de comparer les données de sortie du capteur (13) à un modèle de calibrage prédéfini.

2. Dispositif (12) selon la revendication 1, **caractérisé en ce que** l'unité de détermination (14) est aménagée afin de déterminer lors de la détermination de la charge en salissures une pluralité de composants de salissure différents au sein de la charge en salissures.

3. Dispositif (12) selon la revendication 1 ou 2, **caractérisé en ce que** le modèle de calibrage contient une pluralité d'informations spectrales différentes avec des liaisons organiques affectées.

4. Dispositif (12) selon la revendication 1, 2 ou 3, **caractérisé en ce que** le capteur (13) est aménagé afin de acquérir les liaisons organiques à une température définie et/ou en utilisant un facteur de correction.

5. Dispositif (12) selon l'une des revendications 1 à 4, **caractérisé en ce que** le capteur (13) est disposé dans un puisard (17) de l'appareil ménager à circulation d'eau (1) ou dans un agencement by-pass à l'intérieur et/ou à l'extérieur d'une cuve de lavage (2) de l'appareil ménager à circulation d'eau (1).

6. Appareil ménager à circulation d'eau (1) comprenant un dispositif (12) selon l'une des revendications 1 à 5 pour la détermination de la charge en salissures dans un bain de lavage ou de nettoyage dans l'appareil ménager à circulation d'eau (1).

7. Appareil ménager à circulation d'eau (1) selon la revendication 6, **caractérisé en ce que** le dispositif (12) pour la détermination d'un encrassement de la vaisselle est aménagé afin de communiquer avec un serveur externe (24).

8. Appareil ménager à circulation d'eau (1) selon la revendication 7, **caractérisé en ce que** le dispositif (12) pour la détermination d'un encrassement de la vaisselle est aménagé afin de transmettre les liaisons organiques acquises et/ou l'encrassement déterminé de la vaisselle au serveur externe (24).

9. Procédé pour la détermination de la charge en salissures d'un bain de lavage ou de nettoyage dans un appareil ménager à circulation d'eau (1), en particulier dans un lave-vaisselle ou dans un lave-linge, comprenant :
- l'acquisition (S1) de valeurs de mesure spectrales de composants de salissure dans le bain de lavage ou de nettoyage dans l'appareil ménager à circulation d'eau (1) en utilisant une spectroscopie proche infrarouge,
- la détermination (S2) de la charge en salissures du bain de lavage ou de nettoyage sur la base des valeurs de mesure spectrales des composants de salissure acquises et
- la comparaison des données de sortie à un modèle de calibrage prédéfini.

10. Procédé pour le lavage de vaisselle ou de textiles dans un appareil ménager à circulation d'eau (1), en particulier dans un lave-vaisselle ou dans un lave-linge, comprenant :
- l'acquisition (S1) de valeurs de mesure spectrales de composants de salissure dans un bain de lavage ou de nettoyage dans l'appareil ménager à circulation d'eau (1) en utilisant une spectroscopie proche infrarouge,
- la détermination (S2) de la charge en salissures du bain de lavage ou de nettoyage sur la base des valeurs de mesure spectrales des composants de salissure acquises,
- la comparaison des données de sortie à un modèle de calibrage prédéfini et
- l'adaptation (S3) de paramètres de lavage d'un programme de lavage actuel sur la base de la charge en salissures déterminée.

11. Procédé pour le lavage de vaisselle ou de textiles dans un appareil ménager à circulation d'eau (1), en particulier dans un lave-vaisselle ou dans un lave-linge, comprenant :
- l'acquisition (S1) de valeurs de mesure spectrales de composants de salissure dans un bain de lavage ou de nettoyage dans l'appareil ménager à circulation d'eau (1) en utilisant une spectroscopie proche infrarouge,
- la détermination (S2) de la charge en salissures du bain de lavage ou de nettoyage sur la base des valeurs de mesure spectrales des composants de salissure acquises,
- la comparaison des données de sortie à un modèle de calibrage prédéfini et
- le dosage (S3) d'un agent de lavage ou détergent sur la base de la charge en salissures déterminée.

12. Procédé selon la revendication 11, **caractérisé en ce que** l'agent de lavage ou le détergent comprend une forme de détergent à plusieurs composants comprenant au moins deux, de préférence tous les trois parmi :
a) une préparation de détergent A de préférence fluide, contenant au moins un composant avec effet nettoyant sur les souillures contenant de l'amidon, en particulier une amylase,
b) une préparation de détergent B de préférence fluide, contenant au moins un composant avec effet nettoyant sur les souillures contenant des protéines, en particulier une protéase et
c) une préparation de détergent C de préférence fluide, contenant au moins un composant avec effet nettoyant sur les souillures grasses, en particulier une lipase ou au moins un agent tensioactif non ionique et le dosage s'effectue de telle sorte qu'une ou plusieurs préparation(s) de détergent A à C est/sont ajoutée(s) de façon dosée sur la base du type et de la quantité des composants de salissure déterminés.

13. Utilisation d'une forme de détergent à plusieurs composants comprenant au moins deux, de préférence tous les trois parmi :
a) une préparation de détergent A de préférence fluide, contenant au moins un composant avec effet nettoyant sur les souillures contenant de l'amidon, en particulier une amylase,
b) une préparation de détergent B de préférence fluide, contenant au moins un composant avec effet nettoyant sur les souillures contenant des protéines, en particulier une protéase et
c) une préparation de détergent C de préférence fluide, contenant au moins un composant avec effet nettoyant sur les souillures grasses, en particulier une lipase ou au moins un agent tensioactif non ionique dans un procédé pour le nettoyage de vaisselle ou de textiles dans un appareil ménager à circulation d'eau (1), en particulier dans un lave-vaisselle ou un lave-linge, selon l'une des revendications 1 à 8.

14. Procédé selon la revendication 12 ou utilisation selon la revendication 13, caractérisé(e) en ce que la forme de détergent à plusieurs composants est confectionnée sous la forme de chambres de réception séparées l'une de l'autre, dans lequel chacune de ces chambres de réception contient une des préparations de détergent, dans lequel/laquelle la forme de confection est de préférence une cartouche avec deux, trois, quatre ou davantage de chambres de réception séparées l'une de l'autre.

15. Procédé ou utilisation selon la revendication 14, **caractérisé en ce que** l'agent de lavage ou le détergent est ajouté de façon dosée via un système de dosage pour le dosage multiple d'agents de lavage et de détergents, dans lequel/laquelle le système de dosage comprend les préparations de détergent A à C, une cartouche pour les préparations de détergent, dans laquelle les préparations de détergents se trouvent dans des chambres de réception séparées l'une de l'autre, et un appareil de dosage relié ou reliable à la cartouche.
